# EUROPEAN PATENT APPLICATION

(11) **EP 4 791 101 A1**
(43) Date of publication of application: **12.08.2026**
(21) Application number: 23954632.8
(22) Date of filing: 07.10.2023
(51) Int. Cl.: H04W 72/232

(54) **COMMUNICATION METHOD AND APPARATUS, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN); CAO, Jianfei, Dongguan, Guangdong 523860 (CN)
(74) Representative: Grassi, Stefano
(86) International application number: PCT/CN2023/123284
(87) International publication number: WO 2025/073119

(57) **Abstract**

Provided in the embodiments of the present application are a communication method and apparatus, and a terminal device and a network device. The method comprises: on N reference signal resources from among K reference signal resources configured by a network device, measuring a reference signal sent by the network device, so as to obtain precoding information corresponding to M reference signal resources from among the K reference signal resources, wherein one or more of the M reference signal resources is/are not included in the N reference signal resources, K being an integer greater than 1, N and M both being integers greater than 0, and N being less than K.

## Description

### TECHNICAL FIELD

Embodiments of the present disclosure relate to the field of mobile communication technologies, and specifically, to a communication method and apparatus, a terminal device, and a network device.

### BACKGROUND ART

In 5G communication systems, Channel State Information (CSI) feedback corresponding to multi-Transmit Reception Point (TRP) transmission schemes can be supported. This CSI feedback is based on specific codebooks, and the network device can perform downlink multi-TRP transmission based on the CSI fed back by the terminal device. For example, CSI feedback corresponding to multi-TRP Non-Coherent Joint Transmission (NC-JT) and CSI feedback corresponding to multi-TRP Coherent Joint Transmission (CJT) can be supported.

However, in existing CSI feedback corresponding to multi-TRP transmission schemes, because each TRP requires independent reference signal resources for CSI measurement, as the number of TRPs increases, or as the number of ports supported by each TRP increases, the actually used reference signal resources also increase linearly. Additionally, the terminal device needs to perform CSI measurement and CSI calculation on the reference signals on all these reference signal resources, and the corresponding computational complexity also increases significantly.

### SUMMARY OF THE INVENTION

Embodiments of the present disclosure provide a communication method and apparatus, a terminal device, and a network device.

According to a first aspect, a communication method provided by an embodiment of the present disclosure includes:
measuring reference signals sent by a network device on N reference signal resources among K reference signal resources configured by the network device, to obtain precoding information corresponding to M reference signal resources among the K reference signal resources.

Here, one or more of the M reference signal resources are not included in the N reference signal resources, and K is an integer greater than 1, N and M are integers greater than 0, and N is less than K.

According to a second aspect, a communication method provided by an embodiment of the present disclosure includes:
sending reference signals to a terminal device on N reference signal resources among K reference signal resources configured for the terminal device; and
receiving precoding information corresponding to M reference signal resources among the K reference signal resources, sent by the terminal device.

Here, one or more of the M reference signal resources are not included in the N reference signal resources, and K is an integer greater than 1, N and M are integers greater than 0, and N is less than K.

According to a third aspect, a communication apparatus provided by an embodiment of the present disclosure, applied to a terminal device, includes:
a first processing unit, configured to measure reference signals sent by a network device on N reference signal resources among K reference signal resources configured by the network device, to obtain precoding information corresponding to M reference signal resources among the K reference signal resources.

Here, one or more of the M reference signal resources are not included in the N reference signal resources, and K is an integer greater than 1, N and M are integers greater than 0, and N is less than K.

According to a fourth aspect, a communication apparatus provided by an embodiment of the present disclosure, applied to a network device, includes:
a second sending unit, configured to send reference signals to a terminal device on N reference signal resources among K reference signal resources configured for the terminal device; and
a second receiving unit, configured to receive precoding information corresponding to M reference signal resources among the K reference signal resources, sent by the terminal device.

Here, one or more of the M reference signal resources are not included in the N reference signal resources, and K is an integer greater than 1, N and M are integers greater than 0, and N is less than K.

According to a fifth aspect, a terminal device provided by an embodiment of the present disclosure includes a processor and a memory. The memory is used for storing computer-executable instructions, and the processor is connected to the memory and is configured to, by executing the computer-executable instructions, implement the communication method according to the first aspect.

According to a sixth aspect, a network device provided by an embodiment of the present disclosure includes a processor and a memory. The memory is used for storing computer-executable instructions, and the processor is connected to the memory and is configured to, by executing the computer-executable instructions, implement the communication method according to the second aspect.

According to a seventh aspect, a chip provided by an embodiment of the present disclosure is used for implementing the communication method according to the first aspect or the second aspect.

Specifically, the chip includes: a processor, configured to invoke and run a computer program from a memory, so that a device equipped with the chip executes the communication method according to the first aspect or the second aspect.

According to an eighth aspect, a computer-readable storage medium provided by an embodiment of the present disclosure stores a computer program, which when executed by at least one processor, implements the communication method according to the first aspect or the second aspect.

According to a ninth aspect, a computer program product provided by an embodiment of the present disclosure includes a computer storage medium, the computer storage medium stores a computer program, the computer program includes instructions executable by at least one processor, and when the instructions are executed by the at least one processor, the communication method according to the first aspect or the second aspect is implemented.

According to a tenth aspect, a computer program provided by an embodiment of the present disclosure, when run on a computer, causes the computer to execute the communication method according to the first aspect or the second aspect.

Embodiments of the present disclosure provide a communication method. On N reference signal resources among K reference signal resources configured by a network device, a terminal device can measure reference signals sent by the network device to obtain precoding information corresponding to M reference signal resources among the K reference signal resources; wherein one or more of the M reference signal resources are not included in the N reference signal resources, and K is an integer greater than 1, N and M are integers greater than 0, and N is less than K. In this way, by measuring the reference signals on the N reference signal resources, the terminal device can obtain precoding information corresponding to the M reference signal resources, thereby not only reducing the reference signal resources actually used by the terminal device and improving the transmission rate, but also reducing the computational complexity of the terminal device measuring the reference signals on the actually used reference signal resources, and reducing the power consumption of the terminal device.

### BRIEF DESCRIPTION OF DRAWINGS

The drawings described herein are provided for further understanding of the present disclosure, constitute a part of this application, and are used to explain the present disclosure together with the illustrative embodiments and descriptions thereof, and do not constitute an undue limitation on the present disclosure. In the drawings:
FIG. 1 is a schematic diagram of a communication architecture;
FIG. 2 is a schematic diagram of a scenario of downlink coherent transmission with multiple TRPs;
FIG. 3A is a first schematic diagram of a scenario of downlink non-coherent transmission with multiple PDCCHs;
FIG. 3B is a second schematic diagram of a scenario of downlink non-coherent transmission with multiple PDCCHs;
FIG. 4 is a schematic diagram of a scenario of downlink non-coherent transmission with a single PDCCH;
FIG. 5 is a schematic diagram of a neuron structure;
FIG. 6 is a schematic diagram of a neural network structure;
FIG. 7 is a schematic diagram of a neural network for CSI feedback;
FIG. 8 is a schematic flowchart of a communication method provided by an embodiment of the present disclosure;
FIG. 9 is a schematic structural diagram of a communication apparatus 900 provided by an embodiment of the present disclosure;
FIG. 10 is a schematic structural diagram of a communication apparatus 1000 provided by an embodiment of the present disclosure;
FIG. 11 is a schematic structural diagram of a communication device provided by an embodiment of the present disclosure;
FIG. 12 is a schematic structural diagram of a chip provided by an embodiment of the present disclosure;
FIG. 13 is a schematic block diagram of a communication system provided by an embodiment of the present disclosure.

### DETAILED DESCRIPTION

Embodiments of the present disclosure will be described below in conjunction with the accompanying drawings in the embodiments of the present disclosure. Obviously, the described embodiments are only a part of the embodiments of the present disclosure, not all of them. Based on the embodiments in the present disclosure, all other embodiments obtained by a person of ordinary skill in the art without creative efforts shall fall within the protection scope of the present disclosure.

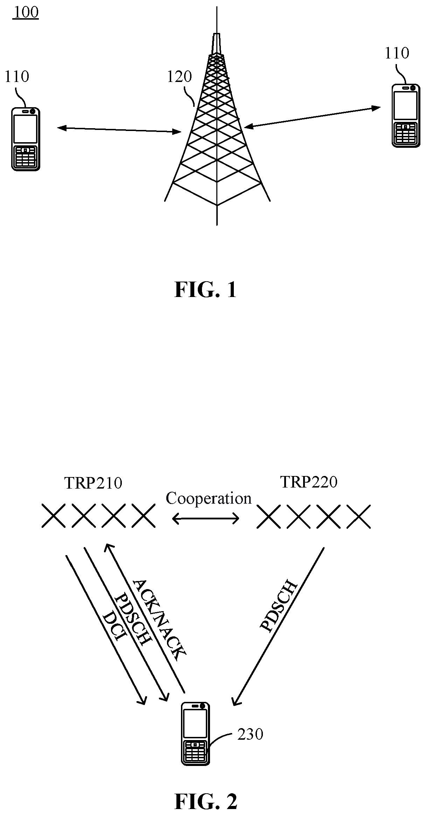

FIG. 1 is a schematic diagram of an application scenario of an embodiment of the present disclosure.

As shown in FIG. 1, a communication system 100 may include a terminal device 110 and a network device 120. The network device 120 can communicate with the terminal device 110 via an air interface. Multi-service transmission is supported between the terminal device 110 and the network device 120.

It should be understood that the communication system 100 is only exemplarily illustrated in this embodiment of the present disclosure, but the embodiment of the present disclosure is not limited thereto. That is to say, the technical solution of the embodiment of the present disclosure can be applied to various communication systems, for example: Long Term Evolution (LTE) system, LTE Time Division Duplex (TDD), Universal Mobile Telecommunication System (UMTS), Internet of Things (IoT) system, Narrow Band Internet of Things (NB-IoT) system, enhanced Machine-Type Communications (eMTC) system, 5G communication system (also referred to as New Radio (NR) communication system), or future communication systems, etc.

In the communication system 100 shown in FIG. 1, the network device 120 may be an access network device that communicates with the terminal device 110. The access network device may provide communication coverage for a specific geographic area and may communicate with terminal devices 110 located within the coverage area.

The network device 120 may be an evolved Node B (eNB or eNodeB) in an LTE system, or a Next Generation Radio Access Network (NG RAN) device, or a base station (gNB) in an NR system, or a wireless controller in a Cloud Radio Access Network (CRAN), or the network device 120 may be a relay station, an access point, an in-vehicle device, a wearable device, a hub, a switch, a bridge, a router, or a network device in a future evolved Public Land Mobile Network (PLMN), etc.

The terminal device 110 may be any terminal device, including but not limited to terminal devices connected via wired or wireless connections to the network device 120 or other terminal devices.

For example, the terminal device 110 may refer to an access terminal, User Equipment (UE), a subscriber unit, a subscriber station, a mobile station, a mobile, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, an IoT device, a satellite handset, a Wireless Local Loop (WLL) station, a Personal Digital Assistant (PDA), a handheld device with wireless communication function, a computing device, or other processing device connected to a wireless modem, an in-vehicle device, a wearable device, a terminal device in a 5G network, or a terminal device in a future evolved network, etc.

The terminal device 110 can be used for Device to Device (D2D) communication.

FIG. 1 exemplarily shows one network device and two terminal devices. Optionally, the communication system 100 may include multiple network devices and the coverage of each network device may include other numbers of terminal devices, which is not limited in the embodiments of the present disclosure.

It should be noted that FIG. 1 only schematically illustrates the system to which the present disclosure is applicable. Of course, the method shown in the embodiments of the present disclosure can also be applied to other systems. In addition, the terms "system" and "network" are often used interchangeably herein.

It should be understood that the term "and/or" herein is merely a description of an association relationship between associated objects, indicating that three relationships may exist. For example, A and/or B may indicate: existence of A alone, simultaneous existence of A and B, and existence of B alone. In addition, the character "/" herein generally indicates that the associated objects before and after it are in an "or" relationship.

It should also be understood that "indicate" mentioned in the embodiments of the present disclosure may be a direct indication, an indirect indication, or may represent an associated relationship. For example, A indicates B may mean that A directly indicates B, for example, B can be obtained through A; it may also mean that A indirectly indicates B, for example, A indicates C, and B can be obtained through C; it may also mean that there is an associated relationship between A and B.

It should also be understood that "correspond" mentioned in the embodiments of the present disclosure may indicate a direct or indirect corresponding relationship between the two, may also indicate an associated relationship between the two, or may indicate an indication and indicated relationship, a configuration and configured relationship, etc.

It should also be understood that "predefined" or "predefined rule" mentioned in the embodiments of the present disclosure may be implemented by pre-storing corresponding codes, tables, or other means that can be used to indicate related information in devices (e.g., which include terminal devices and network devices). The present disclosure does not limit its specific implementation. For example, predefined may refer to definition in a protocol. It should also be understood that, in the embodiments of the present disclosure, the "protocol" may refer to standard protocols in the field of communications, for example, may include LTE protocols, NR protocols, and related protocols applied in future communication systems, which are not limited in the present disclosure.

To facilitate understanding of the technical solutions of the embodiments of the present disclosure, related technologies of the embodiments of the present disclosure are described below. The following related technologies, as optional solutions, may be arbitrarily combined with the technical solutions of the embodiments of the present disclosure, and all fall within the protection scope of the embodiments of the present disclosure.

Downlink CJT based on multiple TRPs has been introduced in NR communication systems. Downlink CJT is generally based on ideal backhaul. Multiple TRPs use different beams and/or precoding matrices to transmit the same data on the same physical resources. By adjusting the precoding matrices, the data sent by different TRPs can be coherently superimposed at the terminal device side, thereby improving data transmission performance.

To enable data sent by different TRPs to be coherently superimposed at the terminal device side, the terminal device needs to feed back CSI for different TRPs based on the CJT assumption.

It should be noted that the terminal device may feed back one Rank Indicator (RI), one or more Precoding Matrix Indicators (PMI), and one Channel Quality Indicator (CQI) in the CSI. Here, the PMI may include precoding information for multiple TRPs. The terminal device may put the precoding information for multiple TRPs in one PMI for feedback, or put them in multiple PMIs for feedback separately, so that when the network device uses this precoding information for precoding, the effect of coherent transmission can be achieved.

It should be noted that CSI can be obtained based on measurements of Channel State Information-Reference Signal (CSI-RS) resources configured by the network device. The network device may configure multiple CSI-RS resources, each corresponding to one TRP. The terminal device performs CSI measurement based on channel information obtained from the multiple CSI-RS resources and the coherent transmission assumption.

Furthermore, the terminal device may select one or more CSI-RS resources from the multiple CSI-RS resources configured by the network device, and feed back CSI corresponding to the one or more CSI-RS resources, thereby implementing the function of TRP selection at the terminal device side and reducing feedback overhead.

FIG. 2 is a schematic diagram of a scenario of downlink coherent transmission with multiple TRPs. As shown in FIG. 2, assuming there are two TRPs, denoted as TRP 210 and TRP 220 respectively, TRP 210 and TRP 220 may cooperate with each other. TRP 210 and TRP 220 may use different beams and/or precoding matrices to send a Physical Downlink Shared Channel (PDSCH) to terminal device 230 respectively on the same physical resources. By adjusting the precoding matrices, the PDSCHs sent by TRP 210 and TRP 220 respectively are coherently superimposed at the terminal device 230 side; terminal device 230 may feed back Acknowledgement (ACK)/Negative Acknowledgement (NACK) and CSI to TRP 210. The Downlink Control Information (DCI) transmitted by TRP 210 for scheduling the PDSCH can be carried by a Control Resource Set (CORESET).

Downlink NC-JT based on multiple TRPs has also been introduced in NR communication systems. The backhaul connection between TRPs can be ideal or non-ideal. Under ideal backhaul, TRPs can quickly and dynamically exchange information; and under non-ideal backhaul, due to large delay, TRPs can exchange information quasi-statically. Multiple TRPs may use different control channels to independently schedule multiple PDSCH transmissions of one terminal device; multiple TRPs may also use the same control channel to schedule transmissions of different TRPs, where data from different TRPs use different transmission layers. Two implementation methods for scheduling using control channels by multiple TRPs are described below.

One possible implementation: For downlink transmission scheduled using multiple Physical Downlink Control Channels (PDCCHs), the scheduled PDSCHs may be transmitted in the same time slot or different time slots. The terminal device needs to support simultaneously receiving PDCCHs and PDSCHs from different TRPs.

It should be noted that the terminal device may feed back ACK/NACK and CSI to the different TRPs transmitting the corresponding PDSCHs respectively. This scenario can be applied to both ideal backhaul and non-ideal backhaul situations. The terminal device may also combine and feed back ACK/NACK and CSI to one TRP. This scenario can be applied to the case of ideal backhaul.

It should also be noted that DCI for scheduling PDSCHs transmitted by different TRPs can be carried by different CORESETs. That is, the network device side can configure multiple CORESETs, each TRP uses its own CORESET to carry DCI. At this time, different TRPs can be distinguished through CORESETs. For example, the network device may configure a CORESET index for each CORESET, and different CORESET indices correspond to different TRPs.

It should also be noted that when feeding back CSI, the terminal device needs to feed back CSI corresponding to each TRP respectively. This CSI may include RI, PMI, CQI, etc. Each TRP can use the CSI obtained respectively for scheduling downlink transmission.

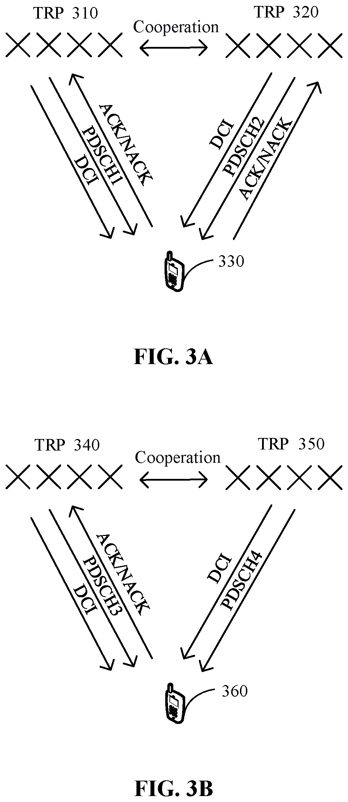

FIG. 3A is a first schematic diagram of a scenario of downlink non-coherent transmission with multiple PDCCHs. As shown in FIG. 3A, assuming there are two TRPs, denoted as TRP 310 and TRP 320 respectively, TRP 310 and TRP 320 may cooperate with each other. TRP 310 may send PDCCH1 and PDSCH1 to terminal device 330, and TRP 320 may send PDCCH2 and PDSCH2 to terminal device 330. Terminal device 330 may feed back ACK/NACK and CSI to the different TRPs transmitting the corresponding PDSCHs (i.e., TRP 310 and TRP 320) respectively. The DCI transmitted by TRP 310 for scheduling PDSCH1 can be carried by CORESET1, and the DCI transmitted by TRP 320 for scheduling PDSCH2 can be carried by CORESET2.

FIG. 3B is a second schematic diagram of a scenario of downlink non-coherent transmission with multiple PDCCHs. As shown in FIG. 3B, assuming there are two TRPs, denoted as TRP 340 and TRP 350 respectively, TRP 340 and TRP 350 may cooperate with each other. TRP 340 may send PDCCH3 and PDSCH3 to terminal device 360, and TRP 350 may send PDCCH4 and PDSCH4 to terminal device 360. Terminal device 360 may combine and feed back ACK/NACK and CSI to one TRP (i.e., TRP 340). The DCI transmitted by TRP 340 for scheduling PDSCH3 can be carried by CORESET3, and the DCI transmitted by TRP 350 for scheduling PDSCH4 can be carried by CORESET4.

Another possible implementation: For downlink transmission scheduled using a single PDCCH, the same DCI can schedule multiple transmission layers from different TRPs. The multiple transmission layers from different TRPs use Demodulation Reference Signal (DMRS) ports in different Command Data Module (CDM) groups and use different Transmission Configuration Indication (TCI) states. The network device needs to indicate DMRS ports from different CDM groups and the TCI states respectively corresponding to the different CDM groups in one DCI, thereby supporting different DMRS ports to be transmitted using different beams. In this case, HARQ-ACK feedback can reuse the mechanism in the existing protocol. This scenario is suitable for ideal backhaul.

It should be noted that the terminal device needs to report RI and PMI corresponding to different TRPs respectively, and a joint CQI in one CSI. The joint CQI can be used to determine the Modulation and Coding Scheme (MCS). The network device may configure the terminal device to report CSI corresponding to multiple different transmission hypotheses respectively, for example, simultaneously reporting CSI based on a single-TRP transmission hypothesis and CSI based on a multi-TRP NC-JT transmission hypothesis. In addition, the network device may also configure the terminal device to report one transmission hypothesis with the best performance among multiple different transmission hypotheses and the corresponding CSI, thereby saving feedback signaling overhead.

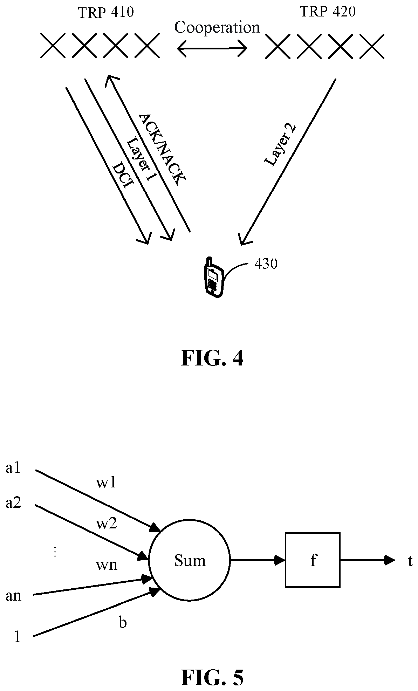

FIG. 4 is a schematic diagram of a scenario of downlink non-coherent transmission with a single PDCCH. As shown in FIG. 4, assuming there are two TRPs, denoted as TRP 410 and TRP 420 respectively, TRP 410 and TRP 420 may cooperate with each other. The DCI transmitted by TRP 410 can be carried by a CORESET, and this DCI can schedule both the transmission layer from TRP 410 (i.e., Layer 1) and the transmission layer from TRP 420 (i.e., Layer 2). Terminal device 430 may combine and feed back ACK/NACK and CSI to one TRP (i.e., TRP 410).

Artificial Intelligence (AI) models are models that can handle multiple tasks. They have the ability to self-learn and self-adapt, and can make dynamic adjustments and decisions according to environmental changes. AI models can also be called Machine Learning (ML) models; the two are equivalent or interchangeable.

In practical applications, AI models can be composed of neural networks. A neural network is a computational model composed of multiple interconnected neuron nodes, where the connections between nodes represent weighted values from input signals to output signals, called weights; each node performs a weighted sum on different input signals and outputs through a specific activation function. Referring to the schematic diagram of a neuron structure shown in FIG. 5, a1, a2, ..., an and 1 are inputs of the neuron, w1, w2, ..., wn and b represent weights, Sum represents a summation function, f represents an activation function, and t is the output result.

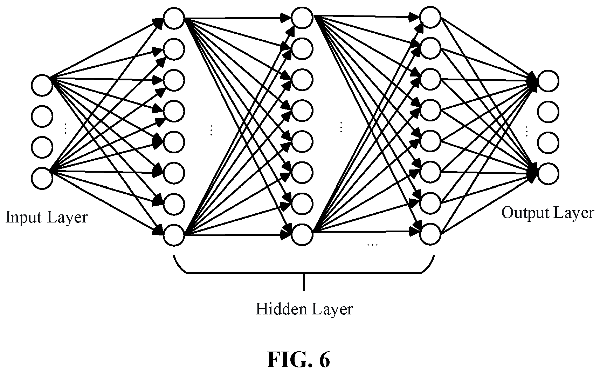

A simple neural network is shown in FIG. 6, including an input layer, a hidden layer, and an output layer. Through different connection methods, weights, and activation functions of multiple neurons, different outputs can be generated, thereby fitting the mapping relationship from input to output. Every upper-level node is connected to all its lower-level nodes. This fully connected model can also be called a Deep Neural Network (DNN).

An AI model can be trained and obtained through processes such as dataset construction, training, validation, and testing. Training can be divided into offline training and online training. The network device can obtain a static training result through offline training using a dataset, which can be called offline training. During the use of the AI model by the network device or terminal device, as the terminal device performs further measurements and/or reporting, the network device can continue to collect more data and perform real-time online training to optimize the parameters of the AI model, achieving better inference and prediction results. After obtaining the AI model, by inputting currently obtained information into the AI model, corresponding model output can be inferred.

For example, when using an AI model for CSI feedback, the obtained channel information (such as eigenvectors, beam information, delay information, etc.) can be used as input to the AI model to infer corresponding CSI quantization bits. There will be a corresponding AI model on the network side. Using the CSI quantization bits as input, the corresponding channel information can be inferred.

When AI models are used for wireless communication, they can be divided into single-end AI models and dual-end AI models. A single-end AI model can be used when deployed on one side of the terminal device or network device, and the AI model can also be trained on a single side; dual-end AI models need to be deployed in pairs on the terminal device side and the network device side. The AI models on both sides need to be trained together. That is to say, the AI models deployed on both sides correspond to each other and cannot be used or updated separately.

It should be noted that the AI model used in the embodiments of the present disclosure can be used for CSI feedback, and thus the AI model used in the embodiments of the present disclosure is a typical dual-end model.

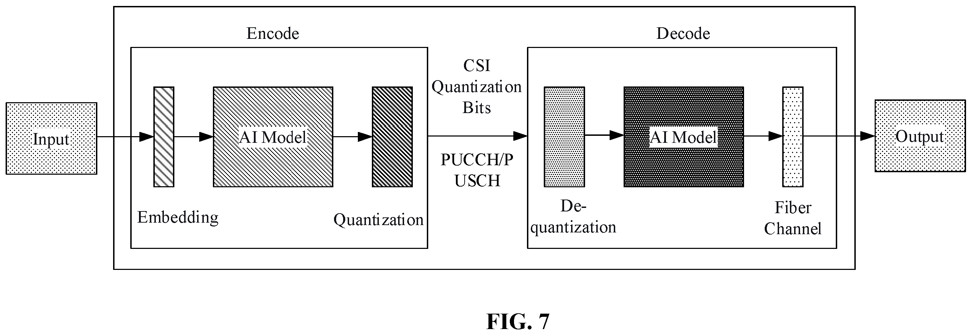

For example, referring to the schematic diagram of a neural network for CSI feedback shown in FIG. 7, the neural network adopts a dual-end AI model structure. An AI model for an encoder is deployed on the terminal device side, and a corresponding AI model for a decoder is deployed on the network device side. The terminal device can perform embedding processing on the input channel information, and use the embedded channel information as input to the encoding AI model. The output of the encoding AI model needs to undergo quantization processing to obtain CSI quantization bits, typically such as PMI bits, which are then fed back to the network device via an uplink channel (such as Physical Uplink Shared Channel (PUSCH)/Physical Uplink Control Channel (PUCCH)). The network device uses the CSI quantization bits (such as PMI) fed back by the terminal after de-quantization processing as input to the decoding AI model, thereby outputting channel information corresponding to the input on the terminal device side (such as eigenvectors of each subband, etc. for downlink precoding), and outputs this channel information via a Fiber Channel (FC).

It should be noted that the terminal device can perform AI model performance monitoring, and report to the network device when the AI model performance is poor, allowing the network device to update the AI model (e.g., update of model structure or model parameters). Since the AI models on both sides are matched, if the network device updates the AI model, it needs to notify the terminal device via signaling, so that the terminal device also updates to the corresponding AI model.

It should also be noted that the above dual-end deployed AI model can be used not only for CSI feedback, but also for other processing methods with corresponding operations/structures on the terminal device side and network device side, such as channel encoding-channel decoding, modulation-demodulation, pilot generation-channel estimation, transmit/receive radio frequency signal processing, etc., only requiring training of a corresponding set of AI models for the terminal device side and the network device side.

In related technologies, CSI feedback corresponding to codebook-based multi-TRP transmission schemes such as NC-JT and CJT can be supported. Among them, CSI feedback for NC-JT is based on the NR eType1 codebook, and CSI feedback for CJT is based on the NR eType2 codebook.

However, in CSI feedback corresponding to codebook-based multi-TRP transmission schemes, on the one hand, because each TRP requires independent CSI-RS resources, as the number of TRPs increases, or as the number of ports supported by each TRP increases, the actually used CSI-RS resources also increase linearly, thereby affecting the transmission rate; on the other hand, as the number of TRPs increases, or as the number of ports supported by each TRP increases, because the terminal device needs to measure CSI-RS on all CSI-RS resources configured by the network device, the corresponding computational complexity also increases, thereby increasing the power consumption of the terminal device.

Based on this, embodiments of the present disclosure provide a communication method. On N reference signal resources among K reference signal resources configured by a network device, a terminal device can measure reference signals sent by the network device to obtain precoding information corresponding to M reference signal resources among the K reference signal resources; wherein one or more of the M reference signal resources are not included in the N reference signal resources, and K is an integer greater than 1, N and M are integers greater than 0, and N is less than K. In this way, by measuring the reference signals on the N reference signal resources, the terminal device can obtain precoding information corresponding to the M reference signal resources, thereby not only reducing the reference signal resources actually used by the terminal device and improving the transmission rate, but also reducing the computational complexity of the terminal device measuring the reference signals on the actually used reference signal resources, and reducing the power consumption of the terminal device.

To facilitate understanding of the technical solutions of the embodiments of the present disclosure, the technical solutions of the present disclosure are described in detail below through specific embodiments. The above related technologies, as optional solutions, may be arbitrarily combined with the technical solutions of the embodiments of the present disclosure, and all fall within the protection scope of the embodiments of the present disclosure. The embodiments of the present disclosure include at least part of the following content.

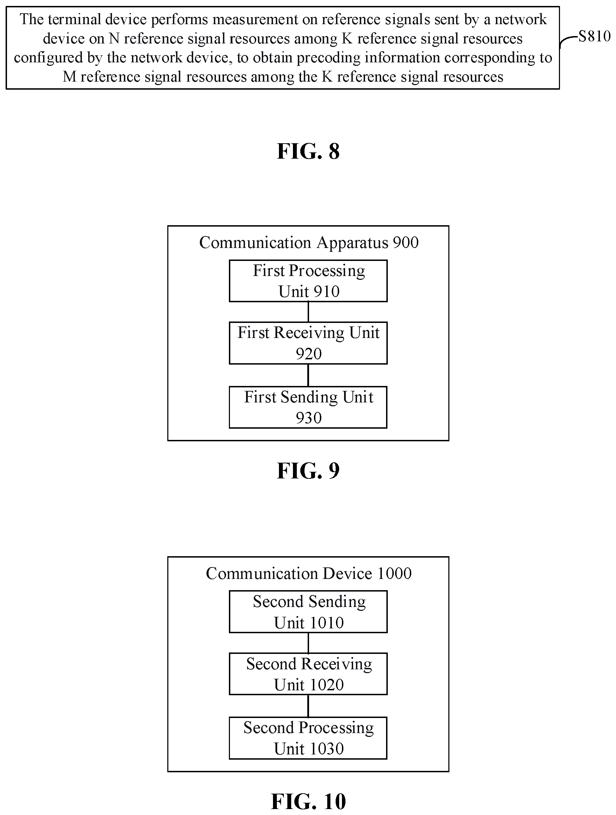

FIG. 8 shows a schematic flowchart of a communication method provided by an embodiment of the present disclosure. As shown in FIG. 8, the method may include the following steps.

S810. A terminal device measures reference signals sent by a network device on N reference signal resources among K reference signal resources configured by the network device, to obtain precoding information corresponding to M reference signal resources among the K reference signal resources.

Here, one or more of the M reference signal resources are not included in the N reference signal resources, and K is an integer greater than 1, N and M are integers greater than 0, and N is less than K.

It should be noted that the network device may configure K reference signal resources for the terminal device.

Correspondingly, the terminal device may receive the K reference signal resources configured by the network device.

Furthermore, among the K reference signal resources configured by the network device, each reference signal resource corresponds to one cooperating TRP of the terminal device. That is to say, the K reference signal resources are reference signal resources respectively configured by the network device for the cooperating K TRPs.

For example, the K reference signal resources may be configured in one reference signal resource set. For example, the K reference signal resources may be configured in one CSI-RS resource set for CSI measurement.

For example, the reference signal resource may be a CSI-RS resource, a Synchronization Signal/PBCH Block (SSB) resource, a CSI Interference Measurement (CSI-IM) resource, etc., which is not limited in the embodiments of the present disclosure.

It should be noted that the network device sending reference signals to the terminal device can be understood as: the network device sends reference signals to the terminal device on the N reference signal resources among the K reference signal resources configured for the terminal device.

Correspondingly, the terminal device may receive the reference signals sent by the network device on the N reference signal resources among the K reference signal resources.

For example, the reference signal may be CSI-RS, SSB, CSI-IM, etc., which is not limited in the embodiments of the present disclosure.

It should be understood that among the K TRPs corresponding to the K reference signal resources, N TRPs send reference signals to the terminal device on their respective reference signal resources, and the terminal device measures the reference signals on the N reference signal resources. The remaining K-N TRPs may not send reference signals to the terminal device; or the remaining K-N TRPs may also send reference signals to the terminal device on their respective reference signal resources, but the terminal device does not need to measure these reference signals; the measurement of these reference signals may be performed at other terminal device sides.

It should be noted that "one or more of the M reference signal resources are not included in the N reference signal resources" can be understood as: since the M reference signal resources are obtained by the terminal device based on measurement and calculation of the reference signals, the M reference signal resources and the N reference signal resources can be two independent resource sets, or two partially overlapping resource sets. That is to say, the M reference signal resources and the N reference signal resources may have no intersection at all, or may contain each other. The relationship between the M reference signal resources and the N reference signal resources depends on the result obtained by the terminal device measuring and calculating the reference signals, and the network device may not impose restrictions on this.

Therefore, "one or more of the M reference signal resources are not included in the N reference signal resources" may include the following two possible implementations.

One possible implementation: The M reference signal resources include the N reference signal resources, and M is greater than N.

For example, assuming that the value of K is 5, the value of M is 3 and the value of N is 2, and the M reference signal resources are denoted as reference signal resource 1, reference signal resource 2, and reference signal resource 3 respectively, then the N reference signal resources may be reference signal resource 1 and reference signal resource 2. At this time, reference signal resource 3 among the M reference signal resources is not included in the N reference signal resources.

In traditional methods, when a terminal device measures reference signals on N reference signal resources, it can only obtain precoding information corresponding to the N reference signal resources. With this method, when the terminal device measures reference signals on the N reference signal resources, it can not only obtain precoding information corresponding to the N reference signal resources, but also obtain precoding information corresponding to reference signal resources other than the N reference signal resources. In this way, when the terminal device obtains precoding information by measuring reference signals, the actually used reference signal resources can be reduced, the transmission rate can be improved, and at the same time, the computational complexity of the terminal device measuring reference signals on the reference signal resources can be reduced, thereby reducing the power consumption of the terminal device.

Another possible implementation: The M reference signal resources do not completely include the N reference signal resources.

For example, assuming that the value of K is 5, the value of M is 3 and the value of N is 3, the M reference signal resources can be denoted as reference signal resource 1, reference signal resource 2, and reference signal resource 3 respectively, and the N reference signal resources can be denoted as reference signal resource 2, reference signal resource 3, and reference signal resource 4 respectively. At this time, reference signal resource 1 among the M reference signal resources is not included in the N reference signal resources, and reference signal resource 2 and reference signal resource 3 among the M reference signal resources are both included in the N reference signal resources.

With this method, when the terminal device measures reference signals on the N reference signal resources, it can obtain precoding information corresponding to reference signal resources other than the N reference signal resources. In this way, when the terminal device obtains precoding information by measuring reference signals, the actually used reference signal resources by the terminal device can be reduced, the transmission rate can be improved, and at the same time, the computational complexity of the terminal device measuring reference signals on the actually used reference signal resources can be reduced, thereby reducing the power consumption of the terminal device.

In some embodiments, the number of CSI Processing Units (CPUs) occupied by the measurement is determined according to the value of N and/or the value of K.

For example, the number of CSI Processing Units occupied by the measurement is equal to N. That is to say, the number of CSI Processing Units is equal to the number of reference signal resources actually measured by the terminal device.

For example, the number of CSI Processing Units occupied by the measurement is equal to K. That is to say, the number of CSI Processing Units is equal to the total number of reference signal resources.

For example, the number of CSI Processing Units occupied by the measurement is equal to N+K. That is to say, the number of CSI Processing Units is equal to the sum of the number of reference signal resources actually measured by the terminal device and the total number of reference signal resources.

In some embodiments, the CSI processing delay required for the measurement is determined according to the value of N and/or the value of K.

For example, the CSI processing delay required for the measurement may be, on the basis of a first threshold, plus an offset value calculated based on N and/or K.

It should be noted that the first threshold may be a predefined parameter value, or a parameter value set by other means, which is not limited in the embodiments of the present disclosure. For example, the first threshold may be a fixed value defined in the protocol.

In some embodiments, the method may further include: the network device sending first indication information to the terminal device, the first indication information being used to indicate the N reference signal resources from the K reference signal resources.

Correspondingly, the terminal device may receive the first indication information sent by the network device.

With this method, after receiving the first indication information sent by the network device, the terminal device can subsequently, on the N reference signal resources indicated by the first indication information, measure the reference signals sent by the network device to obtain the precoding information corresponding to the M reference signal resources.

The first indication information may adopt the following several possible implementations to indicate the N reference signal resources from the K reference signal resources.

One possible implementation: The first indication information indicates the N reference signal resources from the K reference signal resources through a first bitmap.

For example, the first indication information includes a K-bit bitmap, each bit corresponding to one of the reference signal resources. When the bit value corresponding to a reference signal resource is 1, it indicates that this reference signal resource is included in the N reference signal resources; when the bit value corresponding to another reference signal resource is 0, it indicates that this other reference signal resource is not included in the N reference signal resources.

With this method, the first indication information can use a first bitmap to indicate the N reference signal resources from the K reference signal resources, so that the N reference signal resources can be determined subsequently through the first bitmap, in order to measure the reference signals sent by the network device on the N reference signal resources and obtain the precoding information corresponding to the M reference signal resources.

Another possible implementation: The first indication information indicates a sampling rate corresponding to the N reference signal resources among the K reference signal resources.

It should be noted that the sampling rate corresponding to the N reference signal resources among the K reference signal resources can be understood as the ratio between the N reference signal resources and the K reference signal resources.

It should also be noted that, according to the sampling rate corresponding to the N reference signal resources among the K reference signal resources, the terminal device can sample from the K reference signal resources according to a predefined manner, thereby obtaining the N reference signal resources.

For example, when the sampling rate corresponding to the N reference signal resources among the K reference signal resources is 1/2 or 2, it indicates N=K/2. At this time, the N reference signal resources are the 2k-th (k>0, i.e., 2, 4, 6, 8, ...) or the (2k+1)-th (k>=0, i.e., 1, 3, 5, 7, ...) reference signal resources among the K reference signal resources.

For example, when the sampling rate corresponding to the N reference signal resources among the K reference signal resources is 1/4 or 4, it indicates N=K/4. At this time, the N reference signal resources are the 4k-th (k>0, i.e., 4, 8, 12, ...), the (4k+1)-th (k>=0, i.e., 1, 5, 9, ...), the (4k+2)-th (k>=0, i.e., 2, 6, 10, ...) or the (4k+3)-th (k>=0, i.e., 3, 7, 11, ...) reference signal resources among the K reference signal resources.

With this method, the first indication information can indicate the sampling rate corresponding to the N reference signal resources among the K reference signal resources, so that the N reference signal resources can be determined subsequently through the sampling rate corresponding to the N reference signal resources among the K reference signal resources, in order to measure the reference signals sent by the network device on the N reference signal resources and obtain the precoding information corresponding to the M reference signal resources.

Another possible implementation: The first indication information indicates indices of the N reference signal resources among the K reference signal resources.

For example, the first indication information may indicate any N index values, and each of the N index values corresponds to one reference signal resource. That is to say, each index value indicates the index of one of the N reference signal resources among the K reference signal resources.

For example, the first indication information may indicate one index value. The N reference signal resources may be consecutive N reference signal resources after this index value; or the N reference signal resources may be consecutive N reference signal resources before this index value. Further, the N reference signal resources may be determined as the consecutive N reference signal resources after this index value by a predefined manner; or the N reference signal resources may be determined as the consecutive N reference signal resources before this index value by a predefined manner.

With this method, the first indication information can indicate the indices of the N reference signal resources among the K reference signal resources, so that the N reference signal resources can be determined subsequently through the indices of the N reference signal resources among the K reference signal resources, in order to measure the reference signals sent by the network device on the N reference signal resources and obtain the precoding information corresponding to the M reference signal resources.

In another possible implementation, the first indication information indicates the value of N, and the N reference signal resources are the first N reference signal resources among the K reference signal resources.

For example, the first N reference signal resources may be sorted according to the order configured by the network device. The first N reference signal resources may be the first N reference signal resources in the reference signal resource set configured by the network device.

For example, the first N reference signal resources may be sorted according to reference signal resource IDs. The first N reference signal resources may be the N reference signal resources with the lowest reference signal resource IDs in the reference signal resource set.

With this method, the first indication information can indicate that the N reference signal resources are the first N reference signal resources among the K reference signal resources, so that the N reference signal resources can be determined directly subsequently, in order to measure the reference signals sent by the network device on the N reference signal resources and obtain the precoding information corresponding to the M reference signal resources.

In some embodiments, the method may further include: the network device sending second indication information to the terminal device, the second indication information being used to indicate the value of M; or the second indication information being used to indicate whether M is allowed to be less than K.

Correspondingly, the terminal device may receive the second indication information sent by the network device.

With this method, after receiving the second indication information sent by the network device, when the second indication information indicates that M is less than K, the terminal device, by measuring the reference signals on the N reference signal resources, can obtain precoding information corresponding to M reference signal resources. That is to say, the terminal device can select M reference signal resources from the K reference signal resources. When the second indication information indicates that M equals K, the terminal device, by measuring the reference signals on the N reference signal resources, can obtain precoding information corresponding to the K reference signal resources. That is to say, the terminal device is not allowed to perform reference signal resource selection.

Based on S810, that the terminal device measures the reference signals on the N reference signal resources to obtain the precoding information corresponding to the M reference signal resources may include the following two methods.

Method #A: That the terminal device measures the reference signals on the N reference signal resources to obtain the precoding information corresponding to the M reference signal resources may include: the terminal device measures the reference signals on the N reference signal resources to obtain channel information corresponding to the N reference signal resources; inputs the channel information corresponding to the N reference signal resources into a first model to obtain the precoding information corresponding to the M reference signal resources.

The channel information corresponding to the N reference signal resources may include the following several possible implementations.

One possible implementation: The channel information corresponding to the N reference signal resources may include N channel matrices respectively corresponding to the N reference signal resources.

It should be noted that the terminal device may measure the reference signals on one reference signal resource to obtain the corresponding channel matrix H, whose dimension is the number of receive ports multiplied by the number of transmit ports. After measuring the reference signals on the N reference signal resources, the terminal device can obtain N channel matrices H respectively corresponding to the N reference signal resources.

Another possible implementation: The channel information corresponding to the N reference signal resources may include N eigenvector matrices respectively corresponding to the N reference signal resources.

It should be noted that the terminal device may measure the reference signal on one reference signal resource to obtain the corresponding channel covariance matrix R. By performing eigenvalue decomposition on the channel covariance matrix R, an eigenvector matrix W can be obtained. Each column vector of the eigenvector matrix W is an eigenvector. After measuring the reference signals on the N reference signal resources, the terminal device can obtain N eigenvector matrices W respectively corresponding to the N reference signal resources.

Another possible implementation: The channel information corresponding to the N reference signal resources may include a joint eigenvector matrix corresponding to the N reference signal resources. The joint eigenvector matrix is the eigenvector matrix corresponding to the merged N channel matrices.

It should be noted that the terminal device may measure the reference signals on the N reference signal resources to obtain N channel matrices H respectively corresponding to the N reference signal resources; the terminal device can merge the N channel matrices H to obtain a joint channel matrix H', whose dimension is the number of receive ports * (N * number of transmit ports). The eigenvector matrix corresponding to the joint channel matrix H' is the joint eigenvector matrix W', whose dimension is (N * number of transmit ports) * R, where R is the number of columns truncated from the joint channel matrix H'.

It should be noted that the channel information corresponding to the N reference signal resources may include one or more of the above several possible implementations. That is to say, the channel information corresponding to the N reference signal resources may include one or more of: N channel matrices respectively corresponding to the N reference signal resources, N eigenvector matrices respectively corresponding to the N reference signal resources, or a joint eigenvector matrix corresponding to the N reference signal resources.

With this method, by measuring the reference signals, the terminal device can obtain one or more of the N channel matrices respectively corresponding to the N reference signal resources, the N eigenvector matrices respectively corresponding to the N reference signal resources, or a joint eigenvector matrix corresponding to the N reference signal resources, so that subsequently one or more of the N channel matrices, the N eigenvector matrices, or the joint eigenvector matrix can be input into the first model to obtain the precoding information corresponding to the M reference signal resources.

For example, the channel information may be subband-specific or wideband. For example, each subband may have N channel matrices H as channel information.

It should be noted that the first model may be configured by the terminal device itself or configured by the network device, which is not limited in the embodiments of the present disclosure.

For example, the first model may be a first AI model.

Taking the network device configuring the first model for the terminal device as an example, the network device may configure the first model for the terminal device. The first model is used to input channel information corresponding to the N reference signal resources obtained by the terminal device measuring the reference signals, and output precoding information corresponding to the M reference signal resources.

Further, the network device configuring the first model for the terminal device may include the following two possible implementations.

One possible implementation: The first model may be determined according to one or more of values of K, N or M. That is to say, the network device may configure the first model for the terminal device according to one or more of values of K, N or M.

It should be noted that when one or more of values of K, N or M are different, the first model configured by the network device is also different.

For example, when M is less than K, the network device may configure the first model for the terminal device according to the values of N and/or M. Further, the network device may pre-configure models corresponding to different values of N and/or M respectively, so that the terminal device can determine the first model according to the values of N and/or M.

Further, when M is less than K, different values of N correspond to different first AI models; or different values of M correspond to different first AI models; or different combinations of N and M correspond to different first AI models.

For example, when M equals K, the network device may configure the first model for the terminal device according to the value of N and/or the value of K. Further, the network device may pre-configure models corresponding to different values of N and/or K respectively, so that the terminal device can determine the first model according to the value of N and/or the value of K.

Further, when M equals K, different values of N correspond to different first models; or different values of K correspond to different first models; or different combinations of N and K correspond to different first models.

With this method, the network device can configure the first model for the terminal device according to one or more of values of K, N or M, so that subsequently the terminal device can obtain the precoding information corresponding to the M reference signal resources based on this first model.

In another possible implementation, the first model may be associated with the resource set where the K reference signal resources are located. That is to say, the network device may configure the first model for the terminal device according to the resource set where the K reference signal resources are located.

It should be noted that different resource sets may be associated with different models. That is to say, when the resource set where the K reference signal resources are located is different, the model configured by the network device is also different.

For example, the network device may pre-configure models corresponding to different resource sets respectively, so that the terminal device can determine the first model according to the resource set where the K reference signal resources are located.

It should be noted that the first model being associated with the resource set where the K reference signal resources are located can be understood as: model information of the first model (such as model ID or model function) may be configured in the configuration information of the resource set where the K reference signal resources are located.

With this method, the network device can configure the first model for the terminal device according to the resource set where the K reference signal resources are located, so that subsequently the terminal device can obtain the precoding information corresponding to the M reference signal resources based on this first model.

Based on Method #A, the terminal device can input the obtained channel information corresponding to the N reference signal resources into the first model to obtain the precoding information corresponding to the M reference signal resources. In this way, when obtaining the precoding information, the terminal device can reduce the actually used reference signal resources, improve the transmission rate; and also reduce the computational complexity of the terminal device, and reduce the power consumption of the terminal device.

Method #B: That the terminal device measures the reference signals on the N reference signal resources to obtain the precoding information corresponding to the M reference signal resources may include: the terminal device measures the reference signals on the N reference signal resources to obtain channel information corresponding to the N reference signal resources; inputs the channel information corresponding to the N reference signal resources into a second model to obtain channel information or precoding information corresponding to the K reference signal resources; inputs the channel information or precoding information corresponding to the K reference signal resources into a third model to obtain the precoding information corresponding to the M reference signal resources; wherein M is less than K.

It should be noted that by measuring the reference signals, the terminal device can obtain one or more of N channel matrices respectively corresponding to the N reference signal resources, N eigenvector matrices respectively corresponding to the N reference signal resources, or a joint eigenvector matrix corresponding to the N reference signal resources, so that subsequently one or more of the N channel matrices, the N eigenvector matrices, or the joint eigenvector matrix can be input into the second model to obtain the channel information or precoding information corresponding to the K reference signal resources.

It should also be noted that the type of channel information corresponding to the K reference signal resources may be the same as or different from the type of channel information corresponding to the N reference signal resources, which is not limited in the embodiments of the present disclosure.

For example, the channel information corresponding to the N reference signal resources may be N channel matrices respectively corresponding to the N reference signal resources, and the channel information corresponding to the K reference signal resources may be K channel matrices respectively corresponding to the K reference signal resources.

For example, the channel information corresponding to the N reference signal resources may be N eigenvector matrices respectively corresponding to the N reference signal resources, and the channel information corresponding to the K reference signal resources may be a joint eigenvector matrix corresponding to the K reference signal resources.

For example, the channel information may be subband-specific or wideband. For example, each subband may have N channel matrices as channel information.

It should be noted that the second model may be configured by the terminal device itself or configured by the network device, which is not limited in the embodiments of the present disclosure.

It should also be noted that the third model may be configured by the terminal device itself or configured by the network device, which is not limited in the embodiments of the present disclosure.

For example, the second model may be a second AI model.

For example, the third model may be a third AI model.

Taking the network device configuring the second model and the third model for the terminal device as an example, the network device may configure the second model and the third model for the terminal device. The second model is used to input channel information corresponding to the N reference signal resources obtained by the terminal device measuring the reference signals, and output channel information or precoding information corresponding to the K reference signal resources. That is, the second model is used to infer channel information or precoding information corresponding to the K reference signal resources from the channel information corresponding to the N reference signal resources. The third model is used to input the channel information or precoding information corresponding to the K reference signal resources and output precoding information corresponding to the M reference signal resources; wherein M is less than K, i.e., the third model is used to select M reference signal resources from the K reference signal resources.

Further, the network device configuring the second model and the third model for the terminal device may include the following two possible implementations.

One possible implementation: The second model may be determined according to one or more of values of N or K; and/or the third model may be determined according to one or more of values of K or M. That is to say, the network device may configure the second model for the terminal device according to one or more of values of N or K; and/or the network device may configure the third model for the terminal device according to one or more of values of K or M.

It should be noted that when one or more of values of N or K are different, the second model configured by the network device is also different.

For example, the network device may pre-configure models corresponding to different values of N and/or K respectively, so that the terminal device can determine the second model according to the value of N and/or the value of K.

Further, different values of N correspond to different second models; or different values of K correspond to different second models; or different combinations of N and K correspond to different second models.

It should be noted that when one or more of values of K or M are different, the third model configured by the network device is also different.

For example, the network device may pre-configure models corresponding to different values of K and/or M respectively, so that the terminal device can determine the third model according to the values of K and/or M.

Further, different values of K correspond to different third models; or different values of M correspond to different third models; or different combinations of K and M correspond to different third models.

With this method, the network device can configure the second model for the terminal device according to one or more of values of N or K; and/or the network device can configure the third model for the terminal device according to one or more of values of K or M, so that subsequently the terminal device can obtain the precoding information corresponding to the M reference signal resources based on this second model and third model.

Another possible implementation: The second model and/or the third model are associated with the resource set where the K reference signal resources are located. That is to say, the network device may configure the second model and/or the third model for the terminal device according to the resource set where the K reference signal resources are located.

It should be noted that different resource sets may be associated with different models. That is to say, when the resource set where the K reference signal resources are located is different, the models configured by the network device are also different.

For example, the network device may pre-configure models corresponding to different resource sets respectively, so that the terminal device can determine the second model and/or the third model according to the resource set where the K reference signal resources are located.

It should be noted that the second model being associated with the resource set where the K reference signal resources are located can be understood as: model information of the second model (such as model ID or model function) may be configured in the configuration information of the resource set where the K reference signal resources are located.

It should also be noted that the third model being associated with the resource set where the K reference signal resources are located can be understood as: model information of the third model (such as model ID or model function) may be configured in the configuration information of the resource set where the K reference signal resources are located.

With this method, the network device can configure the second model and/or the third model for the terminal device according to the resource set where the K reference signal resources are located, so that subsequently the terminal device can obtain the precoding information corresponding to the M reference signal resources based on this second model and/or third model.

It should be noted that the ways for the network device to configure the second model and the third model for the terminal device may include one or more of the above several possible implementations.

For example, the network device may configure the second model for the terminal device according to one or more of values of N or K; the network device may configure the third model for the terminal device according to the resource set where the K reference signal resources are located.

For example, the network device may configure the third model for the terminal device according to one or more of values of K or M; the network device may configure the second model for the terminal device according to the resource set where the K reference signal resources are located.

Based on Method #B, the terminal device can input the obtained channel information corresponding to the N reference signal resources into the second model to obtain the channel information or precoding information corresponding to the K reference signal resources; then input the channel information or precoding information corresponding to the K reference signal resources into the third model to obtain the precoding information corresponding to the M reference signal resources. In this way, when obtaining the precoding information, the terminal device can reduce the actually used reference signal resources, improve the transmission rate; and also reduce the computational complexity of the terminal device, and reduce the power consumption of the terminal device.

In related technologies, because the terminal device needs to feed back CSI for multiple TRPs, the CSI feedback overhead is large; if the CSI feedback overhead is limited, the accuracy of CSI feedback will be reduced, affecting the performance of downlink multi-TRP transmission.

Based on this, in the embodiments of the present disclosure, when the network device configures K reference signal resources for the terminal device, the terminal device may only measure the reference signals on reference signals on the N reference signal resources, and simultaneously send precoding information corresponding to M reference signal resources to the network device.

Correspondingly, the network device may receive the precoding information corresponding to the M reference signal resources sent by the terminal device.

It should be noted that the terminal device may put the precoding information corresponding to the M reference signal resources in one PMI for feedback, or put them in multiple PMIs for feedback separately, which is not limited in the embodiments of the present disclosure.

With this method, when the precoding information corresponding to the M reference signal resources is obtained based on a model (such as the first model, or the second model and the third model), the feedback signaling overhead can be compressed without affecting performance. Furthermore, when M is less than K, the terminal device can feed back precoding information corresponding to selected partial TRPs to the network device, further reducing feedback signaling overhead.

In some embodiments, the precoding information corresponding to the M reference signal resources may be used by the network device to determine the precoding matrix used for data transmission on the antenna ports (or TRPs) corresponding to the M reference signal resources.

It should be noted that the precoding information corresponding to the M reference signal resources may be information after concatenation of precoding information respectively corresponding to the M reference signal resources, or may be jointly encoded precoding information corresponding to the M reference signal resources.

It should also be noted that precoding information corresponding to some of the M reference signal resources may be 0, and at this time the network device does not send data on the antenna ports (or TRPs) corresponding to these reference signal resources.

In some embodiments, after receiving the precoding information corresponding to the M reference signal resources, the network device may determine the precoding matrix used for downlink transmission according to the precoding information corresponding to the M reference signal resources.

For example, after receiving the precoding information corresponding to the M reference signal resources, the network device may decode the precoding information using a fourth model corresponding to the first model, thereby obtaining the precoding matrix used for data transmission on the antenna ports (i.e., the corresponding M TRPs) corresponding to the M reference signal resources.

For example, after receiving the precoding information corresponding to the M reference signal resources, the network device may decode the precoding information using a fifth model corresponding to the second model and a sixth model corresponding to the third model, thereby obtaining the precoding matrix used for data transmission on the antenna ports (i.e., the corresponding M TRPs) corresponding to the M reference signal resources; or the network device may decode the precoding information using a seventh model corresponding to the second model and the third model, thereby obtaining the precoding matrix used for data transmission on the antenna ports (i.e., the corresponding M TRPs) corresponding to the M reference signal resources.

Further, in some embodiments, the precoding matrix corresponding to some of the M reference signal resources may be an all-zero matrix, and at this time the network device does not send data on the antenna ports (or TRPs) corresponding to these reference signal resources.

It should be noted that the first model and the fourth model are dual-end models, need to be deployed in pairs on the terminal device side and the network device side, and the first model and the fourth model need to be trained together.

It should also be noted that the second model, the third model, the fifth model, and the sixth model are dual-end models, need to be deployed in pairs on the terminal device side and the network device side, and the second model, the third model, the fifth model, and the sixth model need to be trained together.

It should also be noted that the second model, the third model, and the seventh model are dual-end models, need to be deployed in pairs on the terminal device side and the network device side, and the second model, the third model, and the seventh model need to be trained together.

Based on Method #A and Method #B, the terminal device, by measuring the reference signals on the N reference signal resources, can obtain precoding information corresponding to the M reference signal resources. Further, the terminal device, by measuring the reference signals on the N reference signal resources, can also obtain third indication information. The third indication information may include one or more of the following:
the value of M;
index indication information of the M reference signal resources;
RI information corresponding to the M reference signal resources; or
CQI information corresponding to the M reference signal resources.

That the terminal device measures the reference signals on the N reference signal resources to obtain the third indication information may have the following two possible implementations.

One possible implementation: The terminal device measures the reference signals on the N reference signal resources to obtain channel information corresponding to the N reference signal resources; inputs the channel information corresponding to the N reference signal resources into the first model to obtain the third indication information.

Another possible implementation: The terminal device measures the reference signals on the N reference signal resources to obtain channel information corresponding to the N reference signal resources; inputs the channel information corresponding to the N reference signal resources into the second model to obtain channel information or precoding information corresponding to the K reference signal resources; inputs the channel information or precoding information corresponding to the K reference signal resources into the third model to obtain the third indication information.

Based on the first two possible implementations, the third indication information may be obtained using the same method as the precoding information.

Another possible implementation: The third indication information may also be obtained by traditional methods, not relying on AI models. For example, the third indication information may be calculated based on a predefined codebook.

It should be noted that the value of M may be the number of reference signal resources (i.e., the number of TRPs) corresponding to the precoding information obtained through the model; the value of M may be the number of reference signal resources selected by the terminal device from the K reference signal resources, thereby implementing the function of TRP selection.

It should also be noted that the index indication information of the M reference signal resources may be information indicating the M reference signal resources from the K reference signal resources.

Further, in some embodiments, the index indication information of the M reference signal resources is used to indicate the M reference signal resources from the K reference signal resources through a second bitmap; or the index indication information of the M reference signal resources is used to indicate indices of the M reference signal resources among the K reference signal resources.

For example, the index indication information of the M reference signal resources includes a K-bit bitmap, each bit corresponding to one of the reference signal resources. When the bit value corresponding to a reference signal resource is 1, it indicates that this reference signal resource is included in the M reference signal resources; when the bit value corresponding to another reference signal resource is 0, it indicates that this other reference signal resource is not included in the M reference signal resources.

For example, the index indication information of the M reference signal resources may indicate any M index values, and each of the M index values corresponds to one reference signal resource. That is to say, each index value indicates the index of one of the M reference signal resources among the K reference signal resources.

For example, the index indication information of the M reference signal resources may indicate one index value. The M reference signal resources may be consecutive M reference signal resources after this index value; or the M reference signal resources may be consecutive M reference signal resources before this index value. Further, the M reference signal resources may be determined as the consecutive M reference signal resources after this index value by a predefined manner; or the M reference signal resources may be determined as the consecutive M reference signal resources before this index value by a predefined manner.

It should be noted that the RI information corresponding to the M reference signal resources is transmission layer number information corresponding to the M TRPs.

It should also be noted that the CQI information corresponding to the M reference signal resources is CQI information calculated based on the precoding information corresponding to the M reference signal resources, or CQI information calculated based on a predefined precoding matrix.

In some embodiments, the terminal device may send the third indication information to the network device.

Correspondingly, the network device may receive the third indication information sent by the terminal device.

It should be noted that the terminal device may receive the value of M indicated by the network device; and/or the terminal device may send the value of M to the network device. Further, which method to adopt may be configured by the network device to the terminal device. For example, the network device may indicate via RRC signaling whether the terminal device needs to report the value of M; if reporting is not needed, the network device may indicate the value of M; or the terminal device may directly assume M=K.

It should be noted that the value of M may be used as input to the first model or the third model, thereby affecting the output of the first model or the third model. For example, different values of M may correspond to different output bit lengths.

Embodiments of the present disclosure provide a communication method. On N reference signal resources among K reference signal resources configured by a network device, a terminal device can measure reference signals sent by the network device to obtain precoding information corresponding to M reference signal resources among the K reference signal resources; wherein one or more of the M reference signal resources are not included in the N reference signal resources, and K is an integer greater than 1, N and M are integers greater than 0, and N is less than K. In this way, by measuring the reference signals on partial reference signal resources, the terminal device can obtain precoding information corresponding to the M reference signal resources, thereby not only reducing the reference signal resources actually used by the terminal device and improving the transmission rate, but also reducing the computational complexity of the terminal device measuring the reference signals on the actually used reference signal resources, and reducing the power consumption of the terminal device.

The communication method provided by the embodiments of the present disclosure is described in detail below in conjunction with specific application scenarios.

Embodiments of the present disclosure provide a CSI reporting method. A terminal device can obtain channel information corresponding to N TRPs based on N reference signal resources, and use an AI model to infer precoding information corresponding to M reference signal resources (corresponding to M TRPs), wherein at least one of the M reference signal resources is not included in the N reference signal resources. Furthermore, the embodiments of the present disclosure also consider aspects such as model configuration, CSI discarding, CSI processing unit occupation, and CSI processing delay.

The embodiments of the present disclosure utilize AI models to achieve multi-TRP CSI feedback based on partial channel information, can support different transmission schemes such as CJT and NC-JT, achieve higher feedback accuracy or lower feedback overhead than existing codebook feedback, and also reduce the overhead of reference signals used for measurement and reduce the measurement complexity of the terminal device.

### First Embodiment

In this embodiment, the terminal device can use a single model to determine precoding information, where M=K. This embodiment may specifically include the following steps:
In S1, the network device may configure K reference signal resources for the terminal device, where K is an integer greater than 1.

Here, among the K reference signal resources, each reference signal resource corresponds to one cooperating TRP of the terminal device. That is to say, the K reference signal resources are reference signal resources respectively configured by the network device for the cooperating K TRPs.

In S2, the terminal device may receive the K reference signal resources configured by the network device.

For example, the K reference signal resources may be configured in one reference signal resource set, for example, a CSI-RS resource set for CSI measurement.

In S3, the network device may send reference signals based on N reference signal resources among the K reference signal resources; N is less than K.

That is to say, among the K TRPs corresponding to the K reference signal resources, only N TRPs actually send reference signals on the N reference signal resources, and the other K-N TRPs do not send reference signals.

Further, the network device may indicate first indication information to the terminal device. The first indication information is used to indicate the N reference signal resources from the K reference signal resources.

In S4, the terminal device may receive the reference signals sent by the network device based on the N reference signal resources among the K reference signal resources.

Further, the terminal device may receive the first indication information sent by the network device. The first indication information is used to indicate the N reference signal resources from the K reference signal resources.

In some embodiments, the first indication information indicates the N reference signal resources from the K reference signal resources using a Bitmap.

For example, the first indication information contains a K-bit Bitmap, each bit corresponding to one reference signal resource. When the bit value corresponding to a reference signal resource is 1, it indicates that this reference signal resource is included in the N reference signal resources; when the bit value corresponding to a reference signal resource is 0, it indicates that this reference signal resource is not included in the N reference signal resources.

In other embodiments, the first indication information indicates a sampling rate corresponding to the N reference signal resources among the K reference signal resources.

It should be noted that the sampling rate can also be understood as the ratio between N and K. That is to say, the first indication information indicates the ratio between N and K.

It should also be noted that, according to this ratio or this sampling rate, the terminal device can sample from the K reference signal resources according to a predefined manner to obtain the N reference signal resources. For example, a sampling rate of 1 indicates N=K, and the N reference signal resources are the K reference signal resources; a sampling rate of 1/2 or 2 indicates N=K/2, and the N reference signal resources are the 2k-th (k>0, i.e., 2, 4, 6, 8, ...) or the (2k+1)-th (k>=0, i.e., 1, 3, 5, 7, ...) reference signal resources among the K reference signal resources; a sampling rate of 1/4 or 4 indicates N=K/4, and the N reference signal resources are the 4k-th (k>0, i.e., 4, 8, 12, ...), the (4k+1)-th (k>=0, i.e., 1, 5, 9, ...), the (4k+2)-th (k>=0, i.e., 2, 6, 10, ...) or the (4k+3)-th (k>=0, i.e., 3, 7, 11, ...) reference signal resources among the K reference signal resources.

In other embodiments, the first indication information indicates the value of N, and the N reference signal resources are the first N reference signal resources among the K reference signal resources.

It should be noted that the first N reference signal resources may be sorted according to the configured order, or may be sorted according to reference signal resource IDs (i.e., the N reference signal resources with the lowest reference signal resource IDs).

In S5, the terminal device performs CSI measurement on the reference signals on the N reference signal resources to obtain precoding information corresponding to the K reference signal resources.

In some embodiments, the terminal device performs CSI measurement on the reference signals on the N reference signal resources to obtain channel information corresponding to the N reference signal resources; uses the channel information corresponding to the N reference signal resources as input to a first AI model (i.e., the first model) to infer and obtain precoding information corresponding to the K reference signal resources.

It should be noted that different values of N correspond to different first AI models; or different values of K correspond to different first AI models; or different combinations of N and K correspond to different first AI models. The network device may pre-configure AI models corresponding to different values of N and/or K respectively, so that the terminal device can determine the first AI model according to the value of N and/or the value of K.

It should also be noted that the first AI model is associated with the resource set where the K reference signal resources are located. For example, model information of the first AI model (such as model ID or model function) may be configured in the configuration information of the resource set. Different resource sets may be associated with different AI models.

In some embodiments, the channel information corresponding to the N reference signal resources may include one or more of the following:
(1) N channel matrices respectively corresponding to the N reference signal resources. The terminal device may perform CSI measurement based on each reference signal resource respectively to obtain the corresponding channel matrix H, whose dimension is the number of transmit ports multiplied by the number of receive ports. The terminal device may use these N channel matrices H as input to the first AI model.
(2) N eigenvector matrices respectively corresponding to the N reference signal resources. The terminal device may perform CSI measurement based on each reference signal resource respectively to obtain the corresponding channel covariance matrix R, and obtain an eigenvector matrix W through eigenvalue decomposition of the channel covariance matrix R, each column vector of the matrix being an eigenvector. The terminal device uses these N eigenvector matrices W as input to the first AI model.
(3) A joint eigenvector matrix corresponding to the N reference signal resources. The terminal device may perform CSI measurement based on the N reference signal resources respectively to obtain N channel matrices H, merge these N channel matrices H to obtain a joint channel matrix H', whose dimension is (N * number of transmit ports) * number of receive ports. The eigenvector matrix corresponding to the joint channel matrix H' is the joint eigenvector matrix W', whose dimension is (N * number of transmit ports) * R, where R is the number of columns truncated from the joint channel matrix H'. The terminal device uses the joint eigenvector matrix W' as input to the first AI model.

For example, the channel information may be subband-specific or wideband. For example, each subband may have N channel matrices H as channel information.

Furthermore, by performing CSI measurement on the reference signals on the N reference signal resources, the terminal device can also obtain RI information and CQI information (i.e., the third indication information) corresponding to the precoding information. The RI information and CQI information also correspond to the K reference signal resources. The terminal device may report the RI information, CQI information, and precoding information together to the network device.

In some embodiments, the number of CSI processing units occupied by the CSI measurement may be determined according to the value of N and/or the value of K.

For example, the number of CSI processing units is equal to N (i.e., the number of reference signal resources actually measured by the terminal device), or the number of CSI processing units is equal to K (i.e., the number of reference signal resources for which the terminal device needs to estimate precoding information), or the number of CSI processing units is equal to N+K (the sum of the number of reference signal resources actually measured by the terminal device and the number of reference signal resources for which the terminal device needs to estimate precoding information).

In some embodiments, the CSI processing delay required for the CSI measurement may be determined according to the value of N and/or the value of K.

For example, the CSI processing delay required for the CSI measurement may be, on the basis of an existing value, plus an offset value calculated based on N and/or K.

In some embodiments, the precoding information corresponding to the K reference signal resources may be used by the network device to determine the precoding matrix used for data transmission on the antenna ports (or TRPs) corresponding to the K reference signal resources.

Here, the antenna ports (or TRPs) corresponding to the K reference signal resources are the antenna ports (or TRPs) assumed by the terminal device for sending reference signals on the K reference signal resources.

It should be noted that the precoding information may be information after concatenation of precoding information respectively corresponding to the K reference signal resources, or may be jointly encoded precoding information corresponding to the K reference signal resources.

It should also be noted that precoding information corresponding to some of the K reference signal resources may be 0, and at this time the network device does not send data on the antenna ports (or TRPs) corresponding to these reference signal resources.

In S6, the terminal device may report the precoding information corresponding to the K reference signal resources to the network device.

In S7, the network device may receive the precoding information corresponding to the K reference signal resources reported by the terminal device, and determine the precoding matrix used for downlink transmission according to the precoding information corresponding to the K reference signal resources.

It should be noted that after receiving the precoding information corresponding to the K reference signal resources, the terminal device decodes the precoding information using a fourth AI model (i.e., the fourth model) corresponding to the first AI model, thereby obtaining the precoding matrix used for data transmission on the antenna ports (or K TRPs) corresponding to the K reference signal resources.

It should also be noted that the precoding matrix corresponding to some of the K reference signal resources may be an all-zero matrix, and at this time the network device does not send data on the antenna ports (or TRPs) corresponding to these reference signal resources.

The embodiment of the present disclosure provides a communication method. The terminal device can perform CSI measurement on the reference signals based on partial reference signal resources and use a first AI model to obtain complete precoding information corresponding to the K reference signal resources. This not only reduces the actually used reference signal resources but also reduces the complexity required for the terminal device to perform CSI measurement. Moreover, the precoding information obtained based on the first AI model can further compress the feedback signaling overhead.

### Second Embodiment

In this embodiment, the terminal device can use multiple models to determine precoding information, where M<K. This embodiment may specifically include the following steps:

In S1, the network device may configure K reference signal resources for the terminal device, where K is an integer greater than 1.

Here, among the K reference signal resources, each reference signal resource corresponds to one cooperating TRP of the terminal device. That is to say, the K reference signal resources are reference signal resources respectively configured by the network device for the cooperating K TRPs.

In S2, the terminal device may receive the K reference signal resources configured by the network device.

For example, the K reference signal resources may be configured in one reference signal resource set, for example, a CSI-RS resource set for CSI measurement.

In S3, the network device may send reference signals based on N reference signal resources among the K reference signal resources; N is less than L.

That is to say, among the K TRPs corresponding to the K reference signal resources, only N TRPs actually send reference signals on the N reference signal resources, and the other K-N TRPs do not send reference signals.

Further, the network device may indicate first indication information to the terminal device. The first indication information is used to indicate the N reference signal resources from the K reference signal resources. Specific indication methods refer to the description in the first embodiment.

In S4, the terminal device may receive the reference signals sent by the network device based on the N reference signal resources among the K reference signal resources.

Further, the terminal device may receive the first indication information sent by the network device. The first indication information is used to indicate the N reference signal resources from the K reference signal resources. Specific indication methods refer to the description in the first embodiment.

In S5, the terminal device performs CSI measurement on the reference signals on the N reference signal resources to obtain precoding information corresponding to M reference signal resources among the K reference signal resources; wherein at least one of the M reference signal resources is not included in the N reference signal resources.

In some embodiments, the terminal device performs CSI measurement on the reference signals on the N reference signal resources to obtain channel information corresponding to the N reference signal resources; uses the channel information corresponding to the N reference signal resources as input to a second AI model (i.e., the second model) to infer and obtain channel information or precoding information corresponding to the K reference signal resources; uses the channel information or precoding information corresponding to the K reference signal resources as input to a third AI model (i.e., the third model) to infer and obtain precoding information corresponding to the M reference signal resources.

It should be noted that different values of N correspond to different second AI models; or different values of K correspond to different second AI models; or different values of K correspond to different third AI models; or different values of M correspond to different third AI models; or different combinations of N and K correspond to different second AI models; or different combinations of M and K correspond to different third AI models. The network device may pre-configure AI models corresponding to one or more of the different values of N, M, K respectively, so that the terminal device can determine the second/third AI model according to one or more of the values of N, M, K.

It should also be noted that the second AI model and the third AI model are associated with the resource set where the K reference signal resources are located. For example, model information of the second AI model and the third AI model (such as model ID or model function) may be configured in the configuration information of the resource set. Different resource sets may be associated with different AI models.

It should also be noted that the channel information corresponding to the N reference signal resources can refer to the description in the first embodiment. The type of channel information corresponding to the K reference signal resources may be the same as or different from the type of channel information corresponding to the N reference signal resources.

For example, the channel information corresponding to the N reference signal resources may be N channel matrices respectively corresponding to the N reference signal resources, and the channel information corresponding to the K reference signal resources may be K channel matrices respectively corresponding to the K reference signal resources.

For example, the channel information corresponding to the N reference signal resources may be N eigenvector matrices respectively corresponding to the N reference signal resources, and the channel information corresponding to the K reference signal resources may be a joint eigenvector matrix corresponding to the K reference signal resources.

For example, the channel information may be subband-specific or wideband. For example, each subband may have N channel matrices as channel information.

In other embodiments, the terminal device performs CSI measurement on the reference signals on the N reference signal resources to obtain channel information corresponding to the N reference signal resources; uses the channel information corresponding to the N reference signal resources as input to a first AI model to infer and obtain precoding information corresponding to M reference signal resources among the K reference signal resources. The specific method is similar to the method for obtaining precoding information corresponding to the K reference signal resources in the first embodiment, and will not be repeated here in the embodiments of the present disclosure.

Furthermore, by performing CSI measurement on the reference signals on the N reference signal resources, the terminal device can also obtain third indication information. The third indication information includes one or more of the following:
(1) The value of M, i.e., the number of reference signal resources (i.e., the number of TRPs) corresponding to the precoding information output by the AI model. The value of M may be the number of reference signal resources selected by the terminal device from the K reference signal resources, thereby implementing the function of TRP selection.
(2) Index indication information of the M reference signal resources, i.e., information indicating the M reference signal resources from the K reference signal resources. This index indication information may use a Bitmap of length K, or may directly indicate M resource index values, each index value indicating the index of one of the M reference signal resources among the K reference signal resources.
(3) RI information corresponding to the M reference signal resources, i.e., transmission layer number information corresponding to the M TRPs.
(4) CQI information corresponding to the M reference signal resources. That is, CQI calculated based on the precoding information corresponding to the M reference signal resources, or CQI calculated based on a predefined precoding matrix.

It should be noted that since the M reference signal resources are selected by the terminal device based on measurements, the M reference signal resources and the N reference signal resources may be two independent resource sets, or two resource sets that contain each other. That is to say, whether the M reference signal resources and the N reference signal resources have no intersection at all or are partially overlapping sets depends on the result of the terminal device's measurement and selection, and the network device may not impose restrictions on this.

For example, the M reference signal resources include the N reference signal resources and M>N, i.e., more complete precoding information corresponding to M reference signal resources can be obtained through the N reference signal resources.

In some embodiments, the terminal device may receive second indication information from the network device. The second indication information is used to indicate the value of M, or the second indication information is used to indicate whether M is allowed to be less than K (if not allowed, then M=K). That is to say, the second indication information is used to indicate that the terminal device can select and report precoding information corresponding to M reference signal resources. If the network device indicates M=K, the specific process can refer to the description in the first embodiment; if the network device indicates that M can be less than K, the terminal device can report precoding information corresponding to the selected M reference signal resources, i.e., adopt the scheme of this embodiment. The value of M can be used as input to the above-mentioned third AI model or first AI model, thereby affecting the output of the third AI model or the first AI model. For example, different values of M may correspond to different output bit lengths.

In some embodiments, the number of CSI processing units occupied by the CSI measurement may be determined according to the value of N and/or the value of K.

In some embodiments, the CSI processing delay required for the CSI measurement may be determined according to the value of N and/or the value of K.

In some embodiments, the precoding information corresponding to the M reference signal resources may be used by the network device to determine the precoding matrix used for data transmission on the antenna ports (or TRPs) corresponding to the M reference signal resources.

It should be noted that the precoding information may be information after concatenation of precoding information respectively corresponding to the M reference signal resources, or may be jointly encoded precoding information corresponding to the M reference signal resources.

It should also be noted that precoding information corresponding to some of the M reference signal resources may be 0, and at this time the network device does not send data on the antenna ports (or TRPs) corresponding to these reference signal resources.

S6. The terminal device may report the precoding information corresponding to the M reference signal resources to the network device.

S7. The network device may receive the precoding information corresponding to the M reference signal resources reported by the terminal device, and determine the precoding matrix used for downlink transmission according to the precoding information corresponding to the M reference signal resources.

It should be noted that after receiving the precoding information corresponding to the M reference signal resources, the terminal device may decode the precoding information using a fourth AI model corresponding to the first AI model; or may decode the precoding information using a fifth AI model (i.e., the fifth model) corresponding to the second AI model and a sixth AI model (i.e., the sixth model) corresponding to the third AI model; or may decode the precoding information using a seventh AI model (i.e., the seventh model) corresponding to the second AI model and the third AI model, thereby obtaining the precoding matrix used for data transmission on the antenna ports (or M TRPs) corresponding to the M reference signal resources.

It should also be noted that the precoding matrix corresponding to some of the M reference signal resources may be an all-zero matrix, and at this time the network device does not send data on the antenna ports (or TRPs) corresponding to these reference signal resources.

The embodiment of the present disclosure provides a communication method. The terminal device performs CSI measurement based on partial reference signal resources and uses AI models to obtain precoding information corresponding to the selected M reference signal resources. This not only reduces the actually used reference signal resources but also reduces the complexity required for the terminal device to perform CSI measurement. Moreover, since precoding information corresponding to selected partial TRPs is fed back, the feedback signaling overhead is reduced.

The preferred embodiments of the present disclosure have been described in detail above in conjunction with the accompanying drawings. However, the present disclosure is not limited to the specific details in the above embodiments. Within the technical concept of the present disclosure, various simple modifications can be made to the technical solutions of the present disclosure, and these simple modifications all fall within the protection scope of the present disclosure. For example, the various specific technical features described in the above specific embodiments can be combined in any suitable manner without contradiction. To avoid unnecessary repetition, the present disclosure will not separately describe various possible combination methods. For another example, the various different embodiments of the present disclosure can also be combined arbitrarily, as long as they do not violate the idea of the present disclosure, and they should also be regarded as the content disclosed in the present disclosure. For another example, without conflict, the various embodiments described in the present disclosure and/or the technical features in the various embodiments can be arbitrarily combined with the prior art, and the technical solutions obtained after combination should also fall within the protection scope of the present disclosure.

It should also be understood that, in the various method embodiments of the present disclosure, the size of the sequence numbers of the above processes does not imply the order of execution. The execution order of each process should be determined by its function and internal logic, and should not constitute any limitation on the implementation process of the embodiments of the present disclosure.

FIG. 9 is a schematic structural diagram of a communication apparatus 900 provided by an embodiment of the present disclosure, applied to a terminal device. As shown in FIG. 9, the communication apparatus 900 may include:
A first processing unit 910, configured to measure a reference signals sent by a network device on N reference signal resources among K reference signal resources configured by the network device, to obtain precoding information corresponding to M reference signal resources among the K reference signal resources;
Here, one or more of the M reference signal resources are not included in the N reference signal resources, and K is an integer greater than 1, N and M are integers greater than 0, and N is less than K.

In some embodiments, the first processing unit 910 is further configured to measure the reference signals to obtain channel information corresponding to the N reference signal resources; input the channel information corresponding to the N reference signal resources into a first model to obtain the precoding information corresponding to the M reference signal resources.

In some embodiments, the first model is determined according to one or more of values of K, N or M.

In some embodiments, the first model is associated with the resource set where the K reference signal resources are located.

In some embodiments, the first processing unit 910 is further configured to measure the reference signals to obtain channel information corresponding to the N reference signal resources; input the channel information corresponding to the N reference signal resources into a second model to obtain channel information or precoding information corresponding to the K reference signal resources; input the channel information or precoding information corresponding to the K reference signal resources into a third model to obtain the precoding information corresponding to the M reference signal resources; wherein M is less than K.

In some embodiments, the second model is determined according to one or more of values of N or K; and/or the third model is determined according to one or more of values of K or M.

In some embodiments, the second model and/or the third model are associated with the resource set where the K reference signal resources are located.

In some embodiments, the channel information corresponding to the N reference signal resources includes one or more of the following:
N channel matrices respectively corresponding to the N reference signal resources;
N eigenvector matrices respectively corresponding to the N reference signal resources; or
a joint eigenvector matrix corresponding to the N reference signal resources, the joint eigenvector matrix being an eigenvector matrix corresponding to the merged N channel matrices.

In some embodiments, as shown in FIG. 9, the communication apparatus 900 may further include:
a first receiving unit 920, configured to receive first indication information sent by the network device, the first indication information being used to indicate the N reference signal resources from the K reference signal resources.

In some embodiments, the first indication information indicates the N reference signal resources from the K reference signal resources through a first bitmap; or
the first indication information indicates a sampling rate corresponding to the N reference signal resources among the K reference signal resources; or
the first indication information indicates indices of the N reference signal resources among the K reference signal resources; or
the first indication information indicates the value of N, and the N reference signal resources are the first N reference signal resources among the K reference signal resources.

In some embodiments, the first receiving unit 920 is further configured to receive second indication information sent by the network device, the second indication information being used to indicate the value of M; or the second indication information being used to indicate whether M is allowed to be less than K.

In some embodiments, as shown in FIG. 9, the communication apparatus 900 may further include:
A first sending unit 930, configured to send the precoding information corresponding to the M reference signal resources to the network device.

In some embodiments, the first sending unit 930 is further configured to send third indication information to the network device, the third indication information including one or more of the following:
the value of M;
index indication information of the M reference signal resources;
Rank Indicator (RI) information corresponding to the M reference signal resources; or
Channel Quality Indicator (CQI) information corresponding to the M reference signal resources.

In some embodiments, the index indication information is used to indicate the M reference signal resources from the K reference signal resources through a second bitmap; or
the index indication information is used to indicate indices of the M reference signal resources among the K reference signal resources.

In some embodiments, the M reference signal resources include the N reference signal resources, and M is greater than N.

In some embodiments, the number of CSI Processing Units (CPUs) occupied by the measurement is determined according to the value of N and/or the value of K.

In some embodiments, the CSI processing delay required for the measurement is determined according to the value of N and/or the value of K.

The embodiment of the present disclosure provides a communication apparatus. On N reference signal resources among K reference signal resources configured by a network device, a terminal device can measure a reference signals sent by the network device to obtain precoding information corresponding to M reference signal resources among the K reference signal resources; wherein one or more of the M reference signal resources are not included in the N reference signal resources, and K is an integer greater than 1, N and M are integers greater than 0, and N is less than K. In this way, by measuring the reference signals on the N reference signal resources, the terminal device can obtain precoding information corresponding to the M reference signal resources, thereby not only reducing the reference signal resources actually used by the terminal device and improving the transmission rate, but also reducing the computational complexity of the terminal device measuring the reference signals on the actually used reference signal resources, and reducing the power consumption of the terminal device.

Those skilled in the art should understand that the related description of the above communication apparatus in the embodiments of the present disclosure can be understood with reference to the related description of the communication method in the embodiments of the present disclosure.

FIG. 10 is a schematic structural diagram of a communication apparatus 1000 provided by an embodiment of the present disclosure, applied to a network device. As shown in FIG. 10, the communication apparatus 1000 may include:
A second sending unit 1010, configured to send reference signals to a terminal device on N reference signal resources among K reference signal resources configured for the terminal device;
A second receiving unit 1020, configured to receive precoding information corresponding to M reference signal resources among the K reference signal resources, sent by the terminal device;
Here, one or more of the M reference signal resources are not included in the N reference signal resources, and K is an integer greater than 1, N and M are integers greater than 0, and N is less than K.

In some embodiments, as shown in FIG. 10, the communication apparatus 1000 may include:
A second processing unit 1030, configured to configure a first model for the terminal device, the first model being used to input channel information corresponding to the N reference signal resources obtained by the terminal device measuring the reference signals, and output precoding information corresponding to the M reference signal resources.

In some embodiments, the first model is determined according to one or more of values of K, N or M.

In some embodiments, the first model is associated with the resource set where the K reference signal resources are located.

In some embodiments, the second processing unit 1030 is further configured to configure a second model and a third model for the terminal device, the second model being used to input channel information corresponding to the N reference signal resources obtained by the terminal device measuring the reference signals, and output channel information or precoding information corresponding to the K reference signal resources; the third model being used to input the channel information or precoding information corresponding to the K reference signal resources and output precoding information corresponding to the M reference signal resources; wherein M is less than K.

In some embodiments, the second model is determined according to one or more of values of N or K; and/or
the third model is determined according to one or more of values of K or M.

In some embodiments, the second model and/or the third model are associated with the resource set where the K reference signal resources are located.

In some embodiments, the channel information corresponding to the N reference signal resources includes one or more of the following:
N channel matrices respectively corresponding to the N reference signal resources;
N eigenvector matrices respectively corresponding to the N reference signal resources; or
a joint eigenvector matrix corresponding to the N reference signal resources, the joint eigenvector matrix being an eigenvector matrix corresponding to the merged N channel matrices.

In some embodiments, the second sending unit 1010 is further configured to send first indication information to the terminal device, the first indication information being used to indicate the N reference signal resources from the K reference signal resources.

In some embodiments, the first indication information indicates the N reference signal resources from the K reference signal resources through a first bitmap; or
the first indication information indicates a sampling rate corresponding to the N reference signal resources among the K reference signal resources; or
the first indication information indicates indices of the N reference signal resources among the K reference signal resources; or
the first indication information indicates the value of N, and the N reference signal resources are the first N reference signal resources among the K reference signal resources.

In some embodiments, the second sending unit 1010 is further configured to send second indication information to the terminal device, the second indication information being used to indicate the value of M; or the second indication information being used to indicate whether M is allowed to be less than K.

In some embodiments, the second receiving unit 1020 is further configured to receive third indication information sent by the terminal device, the third indication information including one or more of the following:
the value of M;
index indication information of the M reference signal resources;
Rank Indicator (RI) information corresponding to the M reference signal resources; or
Channel Quality Indicator (CQI) information corresponding to the M reference signal resources.

In some embodiments, the index indication information indicates the M reference signal resources from the K reference signal resources through a second bitmap; or
the index indication information indicates indices of the M reference signal resources among the K reference signal resources.

In some embodiments, the M reference signal resources include the N reference signal resources, and M is greater than N.

In some embodiments, the number of CSI Processing Units (CPUs) occupied by the measurement is determined according to the value of N and/or the value of K.

In some embodiments, the CSI processing delay required for the measurement is determined according to the value of N and/or the value of K.

The embodiment of the present disclosure provides a communication apparatus. On N reference signal resources among K reference signal resources configured for a terminal device, reference signals are sent to the terminal device; precoding information corresponding to M reference signal resources among the K reference signal resources sent by the terminal device is received; wherein one or more of the M reference signal resources are not included in the N reference signal resources, and K is an integer greater than 1, N and M are integers greater than 0, and N is less than K. In this way, by measuring the reference signals on the N reference signal resources, the terminal device can obtain precoding information corresponding to the M reference signal resources, thereby not only reducing the reference signal resources actually used by the terminal device and improving the transmission rate, but also reducing the computational complexity of the terminal device measuring the reference signals on the actually used reference signal resources, and reducing the power consumption of the terminal device. Furthermore, when M is less than K, the network device can receive precoding information corresponding to partial TRPs sent by the terminal device, reducing feedback signaling overhead.

Those skilled in the art should understand that the related description of the above communication apparatus in the embodiments of the present disclosure can be understood with reference to the related description of the communication method in the embodiments of the present disclosure.

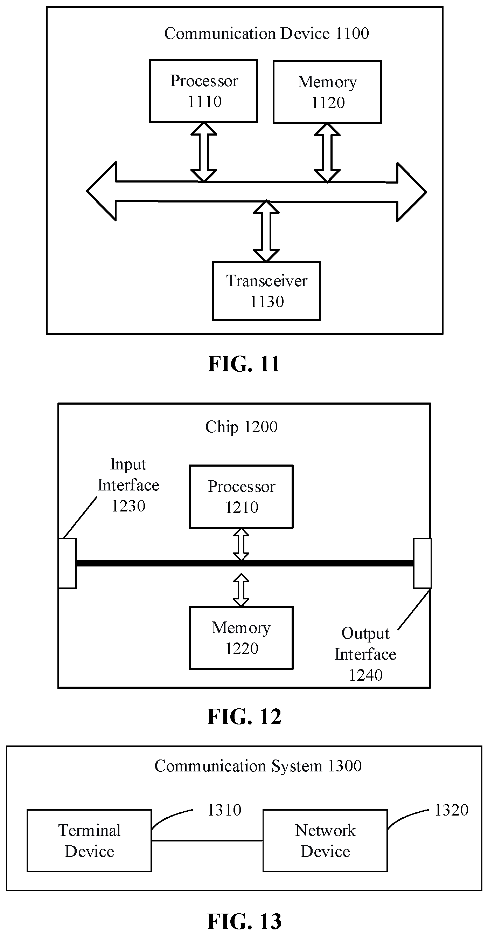

FIG. 11 is a schematic structural diagram of a communication device provided by an embodiment of the present disclosure. The communication device 1100 may be a terminal device or a network device. The communication device 1100 shown in FIG. 11 may include a processor 1110 and a memory 1120.

The memory 1120 may be used to store computer-executable instructions.

The processor 1110 is connected to the memory 1120 and is configured to execute the computer-executable instructions to implement the method in the embodiments of the present disclosure.

The memory 1120 may be a separate device independent of the processor 1110, or may be integrated in the processor 1110.

In some embodiments, as shown in FIG. 11, the communication device 1100 may further include a transceiver 1130. The processor 1110 may control the transceiver 1130 to communicate with other devices, specifically, to send information or data to other devices, or receive information or data sent by other devices.

The transceiver 1130 may include a transmitter and a receiver. The transceiver 1130 may further include an antenna, and the number of antennas may be one or more.

In some embodiments, the communication device 1100 may be the terminal device of the embodiments of the present disclosure, and the communication device 1100 may implement the corresponding processes implemented by the terminal device in the various methods of the embodiments of the present disclosure. For brevity, details are not repeated here.

In some embodiments, the communication device 1100 may be the network device of the embodiments of the present disclosure, and the communication device 1100 may implement the corresponding processes implemented by the network device in the various methods of the embodiments of the present disclosure. For brevity, details are not repeated here.

FIG. 12 is a schematic structural diagram of a chip provided by an embodiment of the present disclosure. The chip 1200 shown in FIG. 12 includes a processor 1210 and a memory 1220, wherein:

The processor 1210 may invoke and run a computer program from the memory 1220, causing a device equipped with the chip to execute the method in the embodiments of the present disclosure.

The memory 1220 may be a separate device independent of the processor 1210, or may be integrated in the processor 1210.

In some embodiments, the chip 1200 may further include an input interface 1230. The processor 1210 may control the input interface 1230 to communicate with other devices or chips, specifically, to obtain information or data sent by other devices or chips.

In some embodiments, the chip 1200 may further include an output interface 1240. The processor 1210 may control the output interface 1240 to communicate with other devices or chips, specifically, to output information or data to other devices or chips.

In some embodiments, the chip may be applied to the network device in the embodiments of the present disclosure, and the chip may implement the corresponding processes implemented by the network device in the various methods of the embodiments of the present disclosure. For brevity, details are not repeated here.

In some embodiments, the chip may be applied to the terminal device in the embodiments of the present disclosure, and the chip may implement the corresponding processes implemented by the terminal device in the various methods of the embodiments of the present disclosure. For brevity, details are not repeated here.

It should be understood that the chip mentioned in the embodiments of the present disclosure may also be referred to as a system-on-chip, system chip, chip system, or on-chip system chip, etc.

FIG. 13 is a schematic block diagram of a communication system provided by an embodiment of the present disclosure. As shown in FIG. 13, the communication system 1300 includes a terminal device 1310 and a network device 1320.

The terminal device 1310 may be used to implement the corresponding functions implemented by the terminal device in the above method, and the network device 1320 may be used to implement the corresponding functions implemented by the network device in the above method. For brevity, details are not repeated here.

It should be understood that the processor in the embodiments of the present disclosure may be an integrated circuit chip with signal processing capability. In the implementation process, each step of the above method embodiments may be completed by an integrated logic circuit of hardware or instructions in the form of software in the processor. The above processor may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, steps, and logical block diagrams disclosed in the embodiments of the present disclosure may be implemented or performed. A general-purpose processor may be a microprocessor, or the processor may be any conventional processor, etc. The steps of the methods combined with the embodiments of the present disclosure may be directly embodied as being executed and completed by a hardware decoding processor, or executed and completed by a combination of hardware and software modules in the decoding processor. The software module may be located in a random access memory, flash memory, read-only memory, programmable read-only memory, electrically erasable programmable memory, registers, or other mature storage media in the art. The storage medium is located in the memory, and the processor reads information in the memory and completes the steps of the above method in combination with its hardware.

It is understandable that the memory in the embodiments of the present disclosure may be volatile memory or non-volatile memory, or may include both volatile and non-volatile memory. The non-volatile memory may be Read-Only Memory (ROM), Programmable ROM (PROM), Erasable PROM (EPROM), Electrically Erasable PROM (EEPROM), or flash memory. The volatile memory may be Random Access Memory (RAM), which is used as an external cache. By way of illustrative but not restrictive description, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable types of memory.

It should be understood that the above memory is exemplary but not restrictive. For example, the memory in the embodiments of the present disclosure may also be Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), Direct Rambus RAM (DR RAM), etc. That is to say, the memory in the embodiments of the present disclosure is intended to include but is not limited to these and any other suitable types of memory.

The embodiments of the present disclosure also provide a computer-readable storage medium. The computer-readable storage medium stores a computer program. When the computer program is executed by at least one processor, the method in the embodiments of the present disclosure is implemented.

In some embodiments, the computer-readable storage medium may be applied to the network device in the embodiments of the present disclosure, and the computer program causes a computer to execute the corresponding processes implemented by the network device in the various methods of the embodiments of the present disclosure. For brevity, details are not repeated here.

In some embodiments, the computer-readable storage medium may be applied to the terminal device in the embodiments of the present disclosure, and the computer program causes a computer to execute the corresponding processes implemented by the terminal device in the various methods of the embodiments of the present disclosure. For brevity, details are not repeated here.

The embodiments of the present disclosure also provide a computer program product. The computer program product includes a computer storage medium, the computer storage medium stores a computer program, the computer program includes instructions executable by at least one processor, and when the instructions are executed by the at least one processor, the method in the embodiments of the present disclosure is implemented.

In some embodiments, the computer program product may be applied to the network device in the embodiments of the present disclosure, and the computer program instructions cause a computer to execute the corresponding processes implemented by the network device in the various methods of the embodiments of the present disclosure. For brevity, details are not repeated here.

In some embodiments, the computer program product may be applied to the terminal device in the embodiments of the present disclosure, and the computer program instructions cause a computer to execute the corresponding processes implemented by the terminal device in the various methods of the embodiments of the present disclosure. For brevity, details are not repeated here.

The embodiments of the present disclosure also provide a computer program. The computer program causes a computer to execute the method in the embodiments of the present disclosure.

In some embodiments, the computer program may be applied to the network device in the embodiments of the present disclosure. When the computer program is run on a computer, it causes the computer to execute the corresponding processes implemented by the network device in the various methods of the embodiments of the present disclosure. For brevity, details are not repeated here.

In some embodiments, the computer program may be applied to the terminal device in the embodiments of the present disclosure. When the computer program is run on a computer, it causes the computer to execute the corresponding processes implemented by the terminal device in the various methods of the embodiments of the present disclosure. For brevity, details are not repeated here.

Those of ordinary skill in the art may realize that the units and algorithm steps of the examples described in conjunction with the embodiments disclosed herein can be implemented by electronic hardware, or a combination of computer software and electronic hardware. Whether these functions are performed by hardware or software depends on the specific application and design constraints of the technical solution. Professionals can use different methods for each specific application to implement the described functions, but such implementation should not be considered beyond the scope of the present disclosure.

Those skilled in the art can clearly understand that, for the convenience and conciseness of description, the specific working processes of the systems, apparatuses, and units described above can refer to the corresponding processes in the foregoing method embodiments and will not be repeated here.

In the several embodiments provided in the present disclosure, it should be understood that the disclosed systems, apparatuses, and methods may be implemented in other ways. For example, the apparatus embodiments described above are merely illustrative. For example, the division of units is only a division of logical functions. In actual implementation, there may be other division methods. For example, multiple units or components may be combined or integrated into another system, or some features may be ignored or not executed. In addition, the mutual coupling or direct coupling or communication connection shown or discussed may be indirect coupling or communication connection through some interfaces, apparatuses, or units, and may be in electrical, mechanical, or other forms.

The units described as separate components may or may not be physically separated, and the components displayed as units may or may not be physical units, that is, they may be located in one place, or may be distributed on multiple network units. Some or all of the units may be selected according to actual needs to achieve the objectives of the solutions of the embodiments.

In addition, the functional units in the various embodiments of the present disclosure may be integrated into one processing unit, or each unit may exist alone physically, or two or more units may be integrated into one unit.

If the functions are implemented in the form of software functional units and sold or used as independent products, they can be stored in a computer-readable storage medium. Based on this understanding, the technical solution of the present disclosure, in essence, or the part contributing to the prior art, or part of the technical solution, may be embodied in the form of a software product. The computer software product is stored in a storage medium and includes several instructions for causing a computer device (which may be a personal computer, server, network device, etc.) to perform all or part of the steps of the methods described in the various embodiments of the present disclosure. The aforementioned storage medium includes: U disk, mobile hard disk, Read-Only Memory (ROM), Random Access Memory (RAM), magnetic disk or optical disk, and other media that can store program code.

The above is only the specific implementation of the present disclosure, but the protection scope of the present disclosure is not limited thereto. Any person skilled in the art can easily think of changes or substitutions within the technical scope disclosed in the present disclosure, which should be covered within the protection scope of the present disclosure. Therefore, the protection scope of the present disclosure should be subject to the protection scope of the claims.

## Claims

1. A communication method, comprising:
measuring reference signals sent by a network device on N reference signal resources among K reference signal resources configured by the network device, to obtain precoding information corresponding to M reference signal resources among the K reference signal resources,
wherein one or more of the M reference signal resources are not included in the N reference signal resources, and K is an integer greater than 1, N and M are integers greater than 0, and N is less than K.

2. The method according to claim 1, wherein measuring the reference signals sent by the network device to obtain the precoding information corresponding to the M reference signal resources among the K reference signal resources comprises:
measuring the reference signals to obtain channel information corresponding to the N reference signal resources; and
inputting the channel information corresponding to the N reference signal resources into a first model to obtain the precoding information corresponding to the M reference signal resources.

3. The method according to claim 2, wherein the first model is determined according to one or more of values of K, N or M.

4. The method according to claim 2, wherein the first model is associated with a resource set where the K reference signal resources are located.

5. The method according to claim 1, wherein measuring the reference signasl sent by the network device to obtain the precoding information corresponding to the M reference signal resources among the K reference signal resources comprises:
measuring the reference signals to obtain channel information corresponding to the N reference signal resources;
inputting the channel information corresponding to the N reference signal resources into a second model to obtain channel information or precoding information corresponding to the K reference signal resources; and
inputting the channel information or precoding information corresponding to the K reference signal resources into a third model to obtain the precoding information corresponding to the M reference signal resources, wherein M is less than K.

6. The method according to claim 5, wherein the second model is determined according to one or more of values of N or K; and/or
the third model is determined according to one or more of the values of K or M.

7. The method according to claim 5, wherein the second model and/or the third model are associated with a resource set where the K reference signal resources are located.

8. The method according to any one of claims 2 to 7, wherein the channel information corresponding to the N reference signal resources comprises one or more of:
N channel matrices respectively corresponding to the N reference signal resources;
N eigenvector matrices respectively corresponding to the N reference signal resources; or
a joint eigenvector matrix corresponding to the N reference signal resources, the joint eigenvector matrix being an eigenvector matrix corresponding to merged N channel matrices.

9. The method according to any one of claims 1 to 8, further comprising:
receiving first indication information sent by the network device, the first indication information being used to indicate the N reference signal resources from the K reference signal resources.

10. The method according to claim 9, wherein
the first indication information indicates the N reference signal resources from the K reference signal resources through a first bitmap; or
the first indication information indicates a sampling rate corresponding to the N reference signal resources among the K reference signal resources; or
the first indication information indicates indices of the N reference signal resources among the K reference signal resources; or
the first indication information indicates a value of N, and the N reference signal resources are first N reference signal resources among the K reference signal resources.

11. The method according to any one of claims 1 to 10, further comprising:
receiving second indication information sent by the network device, the second indication information being used to indicate a value of M; or the second indication information being used to indicate whether M is allowed to be less than K.

12. The method according to any one of claims 1 to 11, further comprising:
sending the precoding information corresponding to the M reference signal resources to the network device.

13. The method according to any one of claims 1 to 12, further comprising:
sending third indication information to the network device, the third indication information comprising one or more of:
a value of M;
index indication information of the M reference signal resources;
Rank Indicator (RI) information corresponding to the M reference signal resources; or
Channel Quality Indicator (CQI) information corresponding to the M reference signal resources.

14. The method according to claim 13, wherein
the index indication information is used to indicate the M reference signal resources from the K reference signal resources through a second bitmap; or
the index indication information is used to indicate indices of the M reference signal resources among the K reference signal resources.

15. The method according to any one of claims 1 to 14, wherein the M reference signal resources comprise the N reference signal resources, and M is greater than N.

16. The method according to any one of claims 1 to 15, wherein a number of Channel State Information (CSI) processing units occupied by the measurement is determined according to a value of N and/or a value of K.

17. The method according to any one of claims 1 to 16, wherein a Channel State Information (CSI) processing delay required for the measurement is determined according to a value of N and/or a value of K.

18. A communication method, comprising:
sending reference signals to a terminal device on N reference signal resources among K reference signal resources configured for the terminal device; and
receiving precoding information corresponding to M reference signal resources among the K reference signal resources, sent by the terminal device,
wherein one or more of the M reference signal resources are not included in the N reference signal resources, and K is an integer greater than 1, N and M are integers greater than 0, and N is less than K.

19. The method according to claim 18, further comprising:
configuring a first model for the terminal device, the first model being used to input channel information corresponding to the N reference signal resources obtained by the terminal device measuring the reference signals, and output the precoding information corresponding to the M reference signal resources.

20. The method according to claim 19, wherein the first model is determined according to one or more of values of K, N or M.

21. The method according to claim 19, wherein the first model is associated with a resource set where the K reference signal resources are located.

22. The method according to claim 18, further comprising:
configuring a second model and a third model for the terminal device, the second model being used to input channel information corresponding to the N reference signal resources obtained by the terminal device measuring the reference signals, and output channel information or precoding information corresponding to the K reference signal resources; the third model being used to input the channel information or precoding information corresponding to the K reference signal resources and output the precoding information corresponding to the M reference signal resources, wherein M is less than K.

23. The method according to claim 22, wherein the second model is determined according to one or more of values of N or K; and/or
the third model is determined according to one or more of values of K or M.

24. The method according to claim 22, wherein the second model and/or the third model are associated with a resource set where the K reference signal resources are located.

25. The method according to any one of claims 19 to 24, wherein the channel information corresponding to the N reference signal resources comprises one or more of:
N channel matrices respectively corresponding to the N reference signal resources;
N eigenvector matrices respectively corresponding to the N reference signal resources; or
a joint eigenvector matrix corresponding to the N reference signal resources, the joint eigenvector matrix being an eigenvector matrix corresponding to merged N channel matrices.

26. The method according to any one of claims 18 to 25, further comprising:
sending first indication information to the terminal device, the first indication information being used to indicate the N reference signal resources from the K reference signal resources.

27. The method according to claim 26, wherein
the first indication information indicates the N reference signal resources from the K reference signal resources through a first bitmap; or
the first indication information indicates a sampling rate corresponding to the N reference signal resources among the K reference signal resources; or
the first indication information indicates indices of the N reference signal resources among the K reference signal resources; or
the first indication information indicates a value of N, and the N reference signal resources are first N reference signal resources among the K reference signal resources.

28. The method according to any one of claims 18 to 27, further comprising:
sending second indication information to the terminal device, the second indication information being used to indicate a value of M; or the second indication information being used to indicate whether M is allowed to be less than K.

29. The method according to any one of claims 18 to 28, further comprising:
receiving third indication information sent by the terminal device, the third indication information comprising one or more of:
a value of M;
index indication information of the M reference signal resources;
Rank Indicator (RI) information corresponding to the M reference signal resources; or
Channel Quality Indicator (CQI) information corresponding to the M reference signal resources.

30. The method according to claim 29, wherein
the index indication information indicates the M reference signal resources from the K reference signal resources through a second bitmap; or
the index indication information indicates indices of the M reference signal resources among the K reference signal resources.

31. The method according to any one of claims 18 to 30, wherein the M reference signal resources comprise the N reference signal resources, and M is greater than N.

32. The method according to any one of claims 18 to 31, wherein a number of Channel State Information (CSI) processing units occupied by the measurement is determined according to a value of N and/or a value of K.

33. The method according to any one of claims 18 to 32, wherein a Channel State Information (CSI) processing delay required for the measurement is determined according to a value of N and/or a value of K.

34. A communication apparatus, applied to a terminal device, the communication apparatus comprising:
a first processing unit, configured to measure reference signals sent by a network device on N reference signal resources among K reference signal resources configured by the network device, to obtain precoding information corresponding to M reference signal resources among the K reference signal resources,
wherein one or more of the M reference signal resources are not included in the N reference signal resources, and K is an integer greater than 1, N and M are integers greater than 0, and N is less than K.

35. A communication apparatus, applied to a network device, the communication apparatus comprising:
a second sending unit, configured to send reference signals to a terminal device on N reference signal resources among K reference signal resources configured for the terminal device; and
a second receiving unit, configured to receive precoding information corresponding to M reference signal resources among the K reference signal resources, sent by the terminal device,
wherein one or more of the M reference signal resources are not included in the N reference signal resources, and K is an integer greater than 1, N and M are integers greater than 0, and N is less than K.

36. A terminal device, comprising:
a memory, configured to store computer-executable instructions; and
a processor, connected to the memory, configured to execute the computer-executable instructions to implement the method according to any one of claims 1 to 17.

37. A network device, comprising:
a memory, configured to store computer-executable instructions;
a processor, connected to the memory, configured to execute the computer-executable instructions to implement the method according to any one of claims 18 to 33.

38. A chip, comprising:
a processor, configured to invoke and run a computer program from a memory to enable a device equipped with the chip to execute the method according to any one of claims 1 to 17, or to execute the method according to any one of claims 18 to 33.

39. A computer-readable storage medium having stored a computer program that when executed by at least one processor, implements the method according to any one of claims 1 to 17, or implements the method according to any one of claims 18 to 33.

40. A computer program product, comprising a computer storage medium, the computer storage medium storing a computer program, the computer program comprising instructions executable by at least one processor, wherein when the instructions are executed by the at least one processor, the method according to any one of claims 1 to 17 is implemented, or the method according to any one of claims 18 to 33 is implemented.

41. A computer program, wherein the computer program causes a computer to execute the method according to any one of claims 1 to 17, or to implement the method according to any one of claims 18 to 33.
